# EUROPEAN PATENT APPLICATION

(11) **EP 1 667 037 A1**
(43) Date of publication of application: **07.06.2006**
(21) Application number: 04748181.7
(22) Date of filing: 27.07.2004
(51) Int. Cl.: G06F 17/30

(54) **RECORDER, REPRODUCER, METHOD FOR MANAGING FILE, PROGRAM OF METHOD FOR MANAGING FILE, AND RECORDING MEDIUM CONTAINING PROGRAM OF METHOD FOR MANAGING FILE**

(30) Priority: 25.09.2003 JP 2003332758
(71) Applicant: SONY CORPORATION, Tokyo 141-0001 (JP)
(72) Inventor: KAWATE, Fumitaka c/o SONY CORPORATION, Tokyo, 1410001 (JP); HIRABAYASHI, Mitsuhiro c/o SONY CORPORATION,, Tokyo 1410001 (JP); YAMADA, Makoto; c/o SONY CORPORATION,, Tokyo, 1410001 (JP)
(74) Representative: Leppard, Andrew John
(86) International application number: PCT/JP2004/011030
(87) International publication number: WO 2005/031610

(57) **Abstract**

For example, the present invention is applied to an optical disk drive for driving an optical disk used for recording files. The optical disk is also used for recording an index file including a series of entries each used for storing extracted information and size of a recorded file. Management information of files closely related to each other can also be stored collectively in a single entry. In addition, an entry associated with the title of the optical disk can be used for storing video data serving as extracted information. Moreover, the index file may include a shadow file entry including information pointing to an entry associated with a relevant file. Furthermore, information unique to an application can also be cataloged in an index file for each application.

## Description

### Technical Field

The present invention relates to recording apparatus, reproduction apparatus, file management methods, programs used for implementing the file management methods and recording mediums used for recording the programs used for implementing the file management methods. The present invention can be applied to, among others, an optical disk drive. In accordance with the present invention, an index file comprising a series of entries each containing extracted information of a file serving as an object of management is used for setting the size of every file serving as an object of management in an entry, collectively cataloging management information of closely related files in an entry, setting an entry associated with a disk title to point to video data used as extracted information, setting a shadow file entry to point to an entry of a relevant file and cataloging extracted information for every application under management of an index file. Thus, operability can be further raised to a level higher than the level of the conventional system.

### Background Art

In recent years, apparatus including a disk drive have been proposed as apparatus each used for recording a result of image taking onto a random-accessible large-capacity recording medium such as an optical disk.

With regard to such a disk drive, a method for enhancing operability has been proposed. In accordance with the method, which is described in Japanese Patent Laid-open No. 2001-84705, an index file is generated from a large number of files recorded on a recording medium and recorded onto the recording medium and, by using the index file, operability related to the files can be enhanced.

In addition, in accordance with a method disclosed in Japanese Patent Laid-open No. 2002-278996, a large number of files is managed as files related to each other in a hierarchical structure formed in an index file in order to enhance operability related to the files.

By the way, the enhancement based on an index file as enhancement of operability of files to a level higher than the level of the conventional system conceivably results in convenience.

### Disclosure of Invention

It is an object of the present invention addressing the problems described above to provide a recording apparatus and a reproduction apparatus, which are capable of further enhancing operability to a level higher than that of the conventional system in management executed by using an index file as management of a large number of files recorded on a recording medium, and provide a file management method adopted by the recording and reproduction apparatus, a program implementing the file management method as well as a recording medium used for recording the program.

In order to solve the problems described above, in accordance with the present invention applied to a recording apparatus for recording a desired file onto a recording medium: an index file for files which are recorded onto the recording medium, is generated based on a series of entries, which are composed of block of extracted information about the files with which the block is associated; and each of the entries of the index file includes the size of the file associated with the entry.

In accordance with the above configuration of the present invention, in an application to a recording apparatus for recording a desired file onto a recording medium: an index file for files which are recorded onto the recording medium, is generated based on a series of entries, which are composed of block of extracted information about the files with which the block is associated; and each of the entries of the index file includes the size of the file associated with the entry. It is thus unnecessary to meddle in acquisition of the file size of a file from the file management system in order to determine whether the file is reproducible or irreproducible on the basis of the file size. As a result, it is possible to reduce a processing load and, hence, enhance the operability of the index file.

In addition, the present invention is also applied to a reproduction apparatus for reproducing a file from a recording medium on the basis of an index file and presenting the file to the user wherein: an index file for files which are recorded onto the recording medium, is generated based on a series of entries, which are composed of block of extracted information about the files with which the block is associated; and a file size set in any specific one of the entries as the size of a file associated with the specific entry is used as a basis of determination as to whether or not the file associated with the specific entry is a reproducible file.

In addition, the present invention is also applied to a file management method for recording a desired file onto a recording medium wherein: an index file for files which are recorded onto the recording medium, is generated based on a series of entries, which are composed of block of extracted information about the files with which the block is associated; and each of the entries of the index file includes the size of the file associated with the entry.

In addition, the present invention is also applied to a file management method for reproducing a file from a recording medium on the basis of an index file and presenting the file to the user wherein: the index file is generated as an index file comprising a series of entries, which are each an information block associated with any particular one of files recorded on the recording medium and each composed of extracted information of the particular file; and a file size set in any specific one of the entries as the size of a file associated with the specific entry is used as a basis of determination as to whether or not the file associated with the specific entry is a reproducible file.

In addition, the present invention is also applied to a program to be executed by a computer to carry out a predetermined processing procedure as a program implementing a file management method for recording a desired file onto a recording medium wherein: an index file for files which are recorded onto the recording medium, is generated based on a series of entries, which are composed of block of extracted information about the files with which the block is associated; and each of the entries of the index file includes the size of the file associated with the entry.

In addition, the present invention is also applied to a program to be executed by a computer to carry out a predetermined processing procedure as a program implementing a file management method for reproducing a file from a recording medium on the basis of an index file and presenting the file to the user wherein: the index file for files which are recorded onto the recording medium, is generated based on a series of entries, which are composed of block of extracted information about the files with which the block is associated; and the processing procedure includes the step of determining whether or not a file associated with any specific one of the entries is a reproducible file on the basis of a file size set in the specific entry as the size of the file associated with the specific entry.

In addition, the present invention is also applied to a recording medium used for recording a program to be executed by a computer to carry out a predetermined processing procedure as a program implementing a file management method for recording a desired file onto a recording medium wherein: an index file for files which are recorded onto the recording medium, is generated based on a series of entries, which are composed of block of extracted information about the files with which the block is associated; and each of the entries of the index file includes the size of the file associated with the entry.

In addition, the present invention is also applied to a recording medium used for recording a program to be executed by a computer to carry out a predetermined processing procedure as a program implementing a file management method for reproducing a file from a recording medium on the basis of an index file and presenting the file to the user wherein: an index file for files which are recorded onto the recording medium, is generated based on a series of entries, which are composed of block of extracted information about the files with which the block is associated; and the processing procedure includes the step of determining whether or not a file associated with any specific one of the entries is a reproducible file on the basis of a file size set in the specific entry as the size of the file associated with the specific entry.

In accordance with the above configuration of the present invention, it is possible to provide a reproduction apparatus capable of enhancing the operability by reduction of a processing load. In addition, in accordance with the configuration of the present invention, it is possible to provide file management methods each capable of enhancing the operability by reduction of a processing load. On top of that, in accordance with the configuration of the present invention, it is possible to provide programs each implementing a file management method capable of enhancing the operability by reduction of a processing load. Furthermore, in accordance with the configuration of the present invention, it is possible to provide recording mediums each used for storing a program implementing a file management method capable of enhancing the operability by reduction of a processing load.

In addition, the present invention is also applied to a recording apparatus for recording a desired file onto a recording medium wherein: an index file for files which are recorded onto the recording medium, is generated based on a series of entries, which are composed of block of extracted information about the files with which the block is associated; and for a plurality of specific ones selected among the files to be processed at the same time at a reproduction time, the pieces of extracted information of the specific files are recorded collectively in any specific one of the entries.

In accordance with the above configuration of the present invention, in an application to a recording apparatus for recording a desired file onto a recording medium: an index file for files which are recorded onto the recording medium, is generated based on a series of entries, which are composed of block of extracted information about the files with which the block is associated; and for a plurality of specific ones selected among the files to be processed at the same time at a reproduction time, the pieces of extracted information of the specific files are recorded collectively in any specific one of the entries. Since files to be reproduced at the same time can be managed collectively, it is possible to reduce a processing load and, hence, enhance the operability.

In addition, the present invention is also applied to a reproduction apparatus for reproducing a file from a recording medium on the basis of an index file and presenting the file to the user wherein: the index file for files which are recorded onto the recording medium, is generated based on a series of entries, which are composed of block of extracted information about the files with which the block is associated; for a plurality of specific ones selected among the files to be processed at the same time at a reproduction time, the pieces of extracted information of the specific files are recorded collectively in any specific one of the entries; and the specific files are reproduced by using a user interface associated with the specific entry.

In addition, the present invention is also applied to a file management method for recording a desired file onto a recording medium wherein: an index file for files which are recorded onto the recording medium, is generated based on a series of entries, which are composed of block of extracted information about the files with which the block is associated; and for a plurality of specific ones selected among the files to be processed at the same time at a reproduction time, the pieces of extracted information of the specific files are recorded collectively in any specific one of the entries.

In addition, the present invention is also applied to a file management method for reproducing a file from a recording medium on the basis of an index file and presenting the file to the user wherein: an index file for files which are recorded onto the recording medium, is generated based on a series of entries, which are composed of block of extracted information about the files with which the block is associated; for a plurality of specific ones selected among the files to be processed at the same time at a reproduction time, the pieces of extracted information of the specific files are recorded collectively in any specific one of the entries; and the specific files are reproduced by using a user interface associated with the specific entry.

In addition, the present invention is also applied to a program to be executed by a computer to carry out a predetermined processing procedure as a program implementing a file management method for recording a desired file onto a recording medium wherein: an index file for files which are recorded onto the recording medium, is generated based on a series of entries, which are composed of block of extracted information about the files with which the block is associated; and for a plurality of specific ones selected among the files to be processed at the same time at a reproduction time, the pieces of extracted information of the specific files are recorded collectively in any specific one of the entries.

In addition, the present invention is also applied to a program to be executed by a computer to carry out a predetermined processing procedure as a program implementing a file management method for reproducing a file from a recording medium on the basis of an index file and presenting the file to the user wherein: the index file for files which are recorded onto the recording medium, is generated based on a series of entries, which are composed of block of extracted information about the files with which the block is associated; for a plurality of specific ones selected among the files to be processed at the same time at a reproduction time, the pieces of extracted information of the specific files are recorded collectively in any specific one of the entries; and the processing procedure includes the step of reproducing the specific files by using a user interface associated with the specific entry.

In addition, the present invention is also applied to a recording medium used for recording a program to be executed by a computer to carry out a predetermined processing procedure as a program implementing a file management method for recording a desired file onto a recording medium wherein: an index file for files which are recorded onto the recording medium, is generated based on a series of entries, which are composed of block of extracted information about the files with which the block is associated; and for a plurality of specific ones selected among the files to be processed at the same time at a reproduction time, the pieces of extracted information of the specific files are recorded collectively in any specific one of the entries.

In addition, the present invention is also applied to a recording medium used for recording a program to be executed by a computer to carry out a predetermined processing procedure as a program implementing a file management method for reproducing a file from a recording medium on the basis of an index file and presenting the file to the user wherein: an index file for files which are recorded onto the recording medium, is generated based on a series of entries, which are composed of block of extracted information about the files with which the block is associated; for a plurality of specific ones selected among the files to be processed at the same time at a reproduction time, the pieces of extracted information of the specific files are recorded collectively in any specific one of the entries; and the processing procedure includes the step of reproducing the specific files by using a user interface associated with the specific entry.

In accordance with the above configuration of the present invention, it is possible to provide a reproduction apparatus capable of enhancing the operability by reduction of a processing load. In addition, in accordance with the configuration of the present invention, it is possible to provide file management methods each capable of enhancing the operability by reduction of a processing load. On top of that, in accordance with the configuration of the present invention, it is possible to provide programs each implementing a file management method capable of enhancing the operability by reduction of a processing load. Furthermore, in accordance with the configuration of the present invention, it is possible to provide recording mediums each used for storing a program implementing a file management method capable of enhancing the operability by reduction of a processing load.

In addition, the present invention is also applied to a recording apparatus for recording a desired file onto a recording medium wherein: an index file for files which are recorded onto the recording medium, is generated based on a series of entries, which are composed of block of extracted information about the files with which the block is associated; an entry associated with a root directory of the recording medium is provided in the index file; and information pointing to a video file recorded on the recording medium is set in the entry associated with the root directory.

In accordance with the above configuration of the present invention, in an application to a recording apparatus for recording a desired file onto a recording medium: an index file for files which are recorded onto the recording medium, is generated based on a series of entries, which are composed of block of extracted information about the files with which the block is associated; an entry associated with a root directory of the recording medium is provided in the index file; and information pointing to a video file recorded on the recording medium is set in the entry associated with the root directory. Thus, for example, a video file illustrating a disk title can be recorded onto the recording medium and managed by using the index file. As a result, it is possible to carry out an operation such as a process to automatically reproduce this video file, for example, in order to enhance the operability.

In addition, the present invention is also applied to a reproduction apparatus for reproducing a file from a recording medium on the basis of an index file and presenting the file to the user wherein: the index file for files which are recorded onto the recording medium, is generated based on a series of entries, which are composed of block of extracted information about the files with which the block is associated; information pointing to a video file recorded on the recording medium is set in the entry associated with the root directory; and when the recording medium is mounted on the reproduction apparatus or when a power supply is turned on, the video file is reproduced from the recording medium on the basis of the information pointing to the video file and shows the video file to the user.

In addition, the present invention is also applied to a file management method for recording a desired file onto a recording medium wherein: an index file for files which are recorded onto the recording medium, is generated based on a series of entries, which are composed of block of extracted information about the files with which the block is associated; an entry associated with a root directory of the recording medium is provided in the index file; and information pointing to a video file recorded on the recording medium is set in the entry associated with the root directory.

In addition, the present invention is also applied to a file management method for reproducing a file from a recording medium on the basis of an index file and presenting the file to the user wherein: the index file for files which are recorded onto the recording medium, is generated based on a series of entries, which are composed of block of extracted information about the files with which the block is associated; information pointing to a video file recorded on the recording medium is set in the entry associated with the root directory; and when the recording medium is mounted on the reproduction apparatus or when a power supply is turned on, the video file is reproduced from the recording medium on the basis of the information pointing to the video file and shown to the user.

In addition, the present invention is also applied to a program to be executed by a computer to carry out a predetermined processing procedure as a program implementing a file management method for recording a desired file onto a recording medium wherein: an index file for files which are recorded onto the recording medium, is generated based on a series of entries, which are composed of block of extracted information about the files with which the block is associated; an entry associated with a root directory of the recording medium is provided in the index file; and information pointing to a video file recorded on the recording medium is set in the entry associated with the root directory.

In addition, the present invention is also applied to a program to be executed by a computer to carry out a predetermined processing procedure as a program implementing a file management method for reproducing a file from a recording medium on the basis of an index file and presenting the file to the user wherein: the index file for files which are recorded onto the recording medium, is generated based on a series of entries, which are composed of block of extracted information about the files with which the block is associated; information pointing to a video file recorded on the recording medium is set in the entry associated with the root directory; and the processing procedure includes the step of reproducing the video file from the recording medium on the basis of the information pointing to the video file and showing the video file to the user as triggered by an operation to mount the recording medium or an operation to turn on a power supply.

In addition, the present invention is also applied to a recording medium used for recording a program to be executed by a computer to carry out a predetermined processing procedure as a program implementing a file management method for recording a desired file onto a recording medium wherein: an index file for files which are recorded onto the recording medium, is generated based on a series of entries, which are composed of block of extracted information about the files with which the block is associated; an entry associated with a root directory of the recording medium is provided in the index file; and information pointing to a video file recorded on the recording medium is set in the entry associated with the root directory.

In addition, the present invention is also applied to a recording medium used for recording a program to be executed by a computer to carry out a predetermined processing procedure as a program implementing a file management method for reproducing a file from a recording medium on the basis of an index file and presenting the file to the user wherein: the index file for files which are recorded onto the recording medium, is generated based on a series of entries, which are composed of block of extracted information about the files with which the block is associated; information pointing to a video file recorded on the recording medium is set in the entry associated with the root directory; and the processing procedure includes the step of reproducing the video file from the recording medium on the basis of the information pointing to the video file and showing the video file to the user as triggered by an operation to mount the recording medium or an operation to turn on a power supply.

In accordance with the above configuration of the present invention, it is possible to provide a reproduction apparatus capable of enhancing the operability. In addition, in accordance with the configuration of the present invention, it is possible to provide file management methods each capable of enhancing the operability. On top of that, in accordance with the configuration of the present invention, it is possible to provide programs each implementing a file management method capable of enhancing the operability. Furthermore, in accordance with the configuration of the present invention, it is possible to provide recording mediums each used for storing a program implementing a file management method capable of enhancing the operability.

In addition, the present invention is also applied to a recording apparatus for recording a desired file onto a recording medium wherein: an index file for files which are recorded onto the recording medium, is generated based on a series of entries, which are composed of block of extracted information about the files with which the block is associated; and an entry is cataloged in the index file as a separate entry including extracted information of the particular file and including information set to point to an original entry associated with the particular file.

In accordance with the above configuration of the present invention, in an application to a recording apparatus for recording a desired file onto a recording medium: an index file for files which are recorded onto the recording medium, is generated based on a series of entries, which are composed of block of extracted information about the files with which the block is associated; and an entry is cataloged in the index file as a separate entry including extracted information of the particular file and including information set to point to an original entry associated with the particular file. Thus, it is possible to catalog extracted information in a separate entry serving as a shadow file entry and select the extracted information cataloged in the shadow file entry as extracted information to be presented to the user. As a result, the operability can be enhanced.

In addition, the present invention is also applied to a reproduction apparatus for reproducing a file from a recording medium on the basis of an index file and presenting the file to the user wherein: the index file for files which are recorded onto the recording medium, is generated based on a series of entries, which are composed of block of extracted information about the files with which the block is associated; an entry is cataloged and held in the index file as a separate entry including extracted information of the particular file and including information set to point to an original entry associated with the particular file; and the extracted information included in the separate entry is presented to the user as a substitute for the extracted information recorded in the original entry associated with the particular file.

In addition, the present invention is also applied to a file management method for recording a desired file onto a recording medium wherein: an index file for files which are recorded onto the recording medium, is generated based on a series of entries, which are composed of block of extracted information about the files with which the block is associated; and an entry is cataloged in the index file as a separate entry including extracted information of the particular file and including information set to point to an original entry associated with the particular file.

In addition, the present invention is also applied to a file management method for reproducing a file from a recording medium on the basis of an index file and presenting the file to the user wherein: the index file for files which are recorded onto the recording medium, is generated based on a series of entries, which are composed of block of extracted information about the files with which the block is associated; an entry is cataloged and held in the index file as a separate entry including extracted information of the particular file and including information set to point to an original entry associated with the particular file; and the extracted information included in the separate entry is presented to the user as a substitute for the extracted information recorded in the original entry associated with the particular file.

In addition, the present invention is also applied to a program to be executed by a computer to carry out a predetermined processing procedure as a program implementing a file management method for recording a desired file onto a recording medium wherein: an index file for files which are recorded onto the recording medium, is generated based on a series of entries, which are composed of block of extracted information about the files with which the block is associated; and an entry is cataloged in the index file as a separate entry including extracted information of the particular file and including information set to point to an original entry associated with the particular file.

In addition, the present invention is also applied to a program to be executed by a computer to carry out a predetermined processing procedure as a program implementing a file management method for reproducing a file from a recording medium on the basis of an index file and presenting the file to the user wherein: the index file for files which are recorded onto the recording medium, is generated based on a series of entries, which are composed of block of extracted information about the files with which the block is associated; an entry is cataloged and held in the index file as a separate entry including extracted information of the particular file and including information set to point to an original entry associated with the particular file; and the processing procedure presents the extracted information included in the separate entry to the user as a substitute for the extracted information recorded in the original entry associated with the particular file.

In addition, the present invention is also applied to a recording medium used for recording a program to be executed by a computer to carry out a predetermined processing procedure as a program implementing a file management method for recording a desired file onto a recording medium wherein: an index file for files which are recorded onto the recording medium, is generated based on a series of entries, which are composed of block of extracted information about the files with which the block is associated; and an entry is cataloged in the index file as a separate entry including extracted information of the particular file and including information set to point to an original entry associated with the particular file.

In addition, the present invention is also applied to a recording medium used for recording a program to be executed by a computer to carry out a predetermined processing procedure as a program implementing a file management method for reproducing a file from a recording medium on the basis of an index file and presenting the file to the user wherein: the index file for files which are recorded onto the recording medium, is generated based on a series of entries, which are composed of block of extracted information about the files with which the block is associated; an entry is cataloged and held in the index file as a separate entry including extracted information of the particular file and including information set to point to an original entry associated with the particular file; and the processing procedure presents the extracted information included in the separate entry to the user as a substitute for the extracted information recorded in the original entry associated with the particular file.

In accordance with the above configuration of the present invention, it is possible to provide a reproduction apparatus capable of enhancing the operability by using extracted information cataloged in a shadow file entry. In addition, in accordance with the configuration of the present invention, it is possible to provide file management methods each capable of enhancing the operability by using extracted information cataloged in a shadow file entry. On top of that, in accordance with the configuration of the present invention, it is possible to provide programs each implementing a file management method capable of enhancing the operability by using extracted information cataloged in a shadow file entry. Furthermore, in accordance with the configuration of the present invention, it is possible to provide recording mediums each used for storing a program implementing a file management method capable of enhancing the operability by using extracted information cataloged in a shadow file entry.

In addition, the present invention is also applied to a recording apparatus for recording a desired file onto a recording medium wherein: an index file for files which are recorded onto the recording medium, is generated based on a series of entries, which are composed of block of extracted information about the files with which the block is associated; and if there is another file that needs to be updated to accompany an operation to newly record a file to serve as an object of management, update an already recorded file serving as an object of management or delete an already recorded file serving as an object of management, information pointing to an entry associated with the other file is cataloged in an entry associated with the newly recorded file to serve as an object of management, the updated file serving as an object of management or the deleted file serving as an object of management.

In accordance with the above configuration of the present invention, in an application to a recording apparatus for recording a desired file onto a recording medium: an index file for files which are recorded onto the recording medium, is generated based on a series of entries, which are composed of block of extracted information about the files with which the block is associated; and if there is another file that needs to be updated to accompany an operation to newly record a file to serve as an object of management, update an already recorded file serving as an object of management or delete an already recorded file serving as an object of management, information pointing to an entry associated with the other file is cataloged in an entry associated with the newly recorded file to serve as an object of management, the updated file serving as an object of management or the deleted file serving as an object of management. Thus, in a process carried out on the file serving as an object of management, the information pointing to an entry included in the index file as the entry associated with the other file confirms the necessity to also process the other file. As a result, the processing load can be reduced while the operability can be enhanced.

In addition, the present invention is also applied to a file management method for recording a desired file onto a recording medium wherein: an index file for files which are recorded onto the recording medium, is generated based on a series of entries, which are composed of block of extracted information about the files with which the block is associated; and if there is another file that needs to be updated to accompany an operation to newly record a file to serve as an object of management, update an already recorded file serving as an object of management or delete an already recorded file serving as an object of management, information pointing to an entry associated with the other file is cataloged in an entry associated with the newly recorded file to serve as an object of management, the updated file serving as an object of management or the deleted file serving as an object of management.

In addition, the present invention is also applied to a program to be executed by a computer to carry out a predetermined processing procedure as a program implementing a file management method for recording a desired file onto a recording medium wherein: an index file for files which are recorded onto the recording medium, is generated based on a series of entries, which are composed of block of extracted information about the files with which the block is associated; and if there is another file that needs to be updated to accompany an operation to newly record a file to serve as an object of management, update an already recorded file serving as an object of management or delete an already recorded file serving as an object of management, information pointing to an entry associated with the other file is cataloged in an entry associated with the newly recorded file to serve as an object of management, the updated file serving as an object of management or the deleted file serving as an object of management.

In addition, the present invention is also applied to a recording medium used for recording a program to be executed by a computer to carry out a predetermined processing procedure as a program implementing a file management method for recording a desired file onto a recording medium wherein: an index file for files which are recorded onto the recording medium, is generated based on a series of entries, which are composed of block of extracted information about the files with which the block is associated; and if there is another file that needs to be updated to accompany an operation to newly record a file to serve as an object of management, update an already recorded file serving as an object of management or delete an already recorded file serving as an object of management, information pointing to an entry associated with the other file is cataloged in an entry associated with the newly recorded file to serve as an object of management, the updated file serving as an object of management or the deleted file serving as an object of management.

In accordance with the above configuration of the present invention, it is possible to provide a reproduction apparatus capable of reducing the processing load and enhancing the operability. In addition, in accordance with the configuration of the present invention, it is possible to provide a file management method capable of reducing the processing load and enhancing the operability. On top of that, in accordance with the configuration of the present invention, it is possible to provide a program implementing a file management method capable of reducing the processing load and enhancing the operability. Furthermore, in accordance with the configuration of the present invention, it is possible to provide a recording medium used for storing a program implementing a file management method capable of reducing the processing load and enhancing the operability.

In addition, the present invention is also applied to a recording apparatus for recording a desired file onto a recording medium wherein: an index file for files which are recorded onto the recording medium, is generated based on a series of entries, which are composed of block of extracted information about the files with which the block is associated; a private index file for the files recorded on the recording medium is generated and recorded onto the recording medium as an index file, which is unique to an application and comprises a series of pieces of private index data each representing extracted information of one of the files; and in order to distinguish the private index file from another private index file already recorded on the recording medium, in every entry included in the index file as an entry associated with a particular one of the pieces of private index data included in the private index file, information is set to show a relation between the entry and the particular piece of private index data.

In accordance with the above configuration of the present invention, in an application to a recording apparatus for recording a desired file onto a recording medium: an index file for files which are recorded onto the recording medium, is generated based on a series of entries, which are composed of block of extracted information about the files with which the block is associated; a private index file for the files recorded onto the recording medium is generated based on a series of private index data each representing extracted information of one of the files, and recorded onto the recording medium as an index file, which is unique to an application; and in order to distinguish the private index file from another private index file already recorded on the recording medium, in every entry included in the index file as an entry associated with a particular one of the pieces of private index data included in the private index file, information is set to show a relation between the entry and the particular piece of private index data. Thus, a private index file associated with any specific application can be cataloged separately from the index file common to all applications in order to raise the degree of freedom to use the specific application. In addition, the index file and such private index files can be managed in a uniform manner. As a result, by using the private index files, the operability can be enhanced.

In addition, the present invention is also applied to a file management method for recording a desired file onto a recording medium wherein: an index file for files which are recorded onto the recording medium, is generated based on a series of entries, which are composed of block of extracted information about the files with which the block is associated; a private index file for the files recorded onto the recording medium is generated based on a series of private index data each representing extracted information of one of the files, and recorded onto the recording medium as an index file, which is unique to an application; and in order to distinguish the private index file from another private index file already recorded on the recording medium, in every entry included in the index file as an entry associated with a particular one of the pieces of private index data included in the private index file, information is set to show a relation between the entry and the particular piece of private index data.

In addition, the present invention is also applied to a program to be executed by a computer to carry out a predetermined processing procedure as a program implementing a file management method for recording a desired file onto a recording medium wherein: an index file for files which are recorded onto the recording medium, is generated based on a series of entries, which are composed of block of extracted information about the files with which the block is associated; a private index file for the files recorded onto the recording medium is generated based on a series of private index data each representing extracted information of one of the files, and recorded onto the recording medium as an index file, which is unique to an application; and in order to distinguish the private index file from another private index file already recorded on the recording medium, in every entry included in the index file as an entry associated with a particular one of the pieces of private index data included in the private index file, information is set to show a relation between the entry and the particular piece of private index data.

In addition, the present invention is also applied to a recording medium used for recording a program to be executed by a computer to carry out a predetermined processing procedure as a program implementing a file management method for recording a desired file onto a recording medium wherein: an index file for files which are recorded onto the recording medium, is generated based on a series of entries, which are composed of block of extracted information about the files with which the block is associated; a private index file for the files recorded onto the recording medium is generated based on a series of private index data each representing extracted information of one of the files, and recorded onto the recording medium as an index file, which is unique to an application; and in order to distinguish the private index file from another private index file already recorded on the recording medium, in every entry included in the index file as an entry associated with a particular one of the pieces of private index data included in the private index file, information is set to show a relation between the entry and the particular piece of private index data.

In accordance with the above configuration of the present invention, it is possible to provide a file management method capable of enhancing the operability by using private index files. On top of that, in accordance with the configuration of the present invention, it is possible to provide a program implementing a file management method capable of enhancing the operability by using private index files. In addition, in accordance with the configuration of the present invention, it is possible to provide a recording medium used for storing a program implementing a file management method capable of enhancing the operability by using private index files.

In addition, the present invention is also applied to a recording apparatus for recording a desired file onto a recording medium wherein: an index file for files recorded on the recording medium is recorded onto the recording medium as an index file comprising a series of entries, which are each an information block associated with any particular one of the files and each composed of extracted information of the particular file; a private index file for the files recorded on the recording medium is recorded onto the recording medium as an index file, which is unique to an application and comprises a series of pieces of private index data each representing extracted information of one of the files; for each of the private index files, every entry included in the index file as an entry associated with a particular one of the pieces of private index data included in the corresponding private index file includes validity information indicating whether the particular piece of private index data is valid or invalid; and when recording status of a file associated with any specific one of the entries is updated, the validity information included in the specific entry as information indicating whether a piece of private index data is valid or invalid is also updated.

In accordance with the above configuration of the present invention, in an application to a recording apparatus for recording a desired file onto a recording medium: an index file for files recorded on the recording medium is recorded onto the recording medium as an index file comprising a series of entries, which are each an information block associated with any particular one of the files and each composed of extracted information of the particular file; a private index file for the files recorded on the recording medium is recorded onto the recording medium as an index file, which is unique to an application and comprises a series of pieces of private index data each representing extracted information of one of the files; for each of the private index files, every entry included in the index file as an entry associated with a particular one of the pieces of private index data included in the corresponding private index file includes validity information indicating whether the particular piece of private index data is valid or invalid; and when recording status of a file associated with any specific one of the entries is updated, the validity information included in the specific entry as information indicating whether a piece of private index data is valid or invalid is also updated. Thus, on a recording medium allowing a private index file to be recorded thereon to enhance operability, a private index file can be set to keep up with operations such as deletion of a file even if there is no application associated with the private index file. As a result, when the recording medium is mounted on another apparatus having the application associated with the private index file, contradiction caused by the existence of the application can be avoided so that it is possible to enhance the operability due to the prevention of such contradiction.

In addition, the present invention is also applied to a file management method for recording a desired file onto a recording medium wherein: an index file for files recorded on the recording medium is recorded onto the recording medium as an index file comprising a series of entries, which are each an information block associated with any particular one of the files and each composed of extracted information of the particular file; a private index file for the files recorded on the recording medium is recorded onto the recording medium as an index file, which is unique to an application and comprises a series of pieces of private index data each representing extracted information of one of the files; for each of the private index files, every entry included in the index file as an entry associated with a particular one of the pieces of private index data included in the corresponding private index file includes validity information indicating whether the particular piece of private index data is valid or invalid; and when recording status of a file associated with any specific one of the entries is updated, the validity information included in the specific entry as information indicating whether a piece of private index data is valid or invalid is also updated.

In addition, the present invention is also applied to a program to be executed by a computer to carry out a predetermined processing procedure as a program implementing a file management method for recording a desired file onto a recording medium wherein: an index file for files recorded on the recording medium is recorded onto the recording medium as an index file comprising a series of entries, which are each an information block associated with any particular one of the files and each composed of extracted information of the particular file; a private index file for the files recorded on the recording medium is recorded onto the recording medium as an index file, which is unique to an application and comprises a series of pieces of private index data each representing extracted information of one of the files; for each of the private index files, every entry included in the index file as an entry associated with a particular one of the pieces of private index data included in the corresponding private index file includes validity information indicating whether the particular piece of private index data is valid or invalid; and the processing procedure includes the step of updating the validity information included in any specific one of the entries as information indicating whether a piece of private index data is valid or invalid to accompany an operation to update recording status of a file associated with the specific entry.

In addition, the present invention is also applied to a recording medium used for recording a program to be executed by a computer to carry out a predetermined processing procedure as a program implementing a file management method for recording a desired file onto a recording medium wherein: an index file for files recorded on the recording medium is recorded onto the recording medium as an index file comprising a series of entries, which are each an information block associated with any particular one of the files and each composed of extracted information of the particular file; a private index file for the files recorded on the recording medium is recorded onto the recording medium as an index file, which is unique to an application and comprises a series of pieces of private index data each representing extracted information of one of the files; for each of the private index files, every entry included in the index file as an entry associated with a particular one of the pieces of private index data included in the corresponding private index file includes validity information indicating whether the particular piece of private index data is valid or invalid; and the processing procedure includes the step of updating the validity information included in any specific one of the entries as information indicating whether a piece of private index data is valid or invalid to accompany an operation to update recording status of a file associated with the specific entry.

In accordance with the above configuration of the present invention, it is possible to provide a file management method capable of enhancing the operability by management of private index files. On top of that, in accordance with the configuration of the present invention, it is possible to provide a program implementing a file management method capable of enhancing the operability by management of private index files. In addition, in accordance with the configuration of the present invention, it is possible to provide a recording medium used for storing a program implementing a file management method capable of enhancing the operability by management of private index files.

As described above, the present invention can be applied to an optical disk drive for example in order to enhance the operability to a level higher than that of the conventional system.

### Brief Description of Drawings

Fig. 1 is a block diagram showing an optical disk drive;
Fig. 2 is a diagram showing elements of an index file;
Fig. 3 is a diagram showing the structure of real data of a property;
Fig. 4 is a diagram showing the structure of property entry flags included in the property shown in Fig. 3;
Fig. 5 is a diagram showing values of a property entry type included in the property entry flags shown in Fig. 4;
Fig. 6 is a diagram showing the structure of basic property data included in the property shown in Fig. 3;
Fig. 7 is a diagram showing the structure of in-group file management list extension data;
Fig. 8 is a diagram showing the structure of an entry included in the in-group file management list extension data shown in Fig. 7 as an entry associated with a relevant file;
Fig. 9 is a rough diagram used for explaining the in-group file management list extension data;
Fig. 10 is a diagram showing the structure of disk title property extension data;
Fig. 11 is a diagram showing the structure of interfile relation information extension data;
Fig. 12 is a rough diagram used for explaining the interfile relation information extension data;
Fig. 13 is a diagram showing the structure of a list of private index files;
Fig. 14 is a diagram showing detailed fields of an entry included in the list of private index files shown in Fig. 13 as an entry of information on a private index file;
Fig. 15 is a rough diagram used for explaining the list of private index files;
Fig. 16 is a diagram showing a structure including a private data status flag;
Fig. 17 shows a flowchart representing a processing procedure related to a file size; and
Fig. 18 shows a flowchart representing a processing procedure related to a disk title.

### Best Mode for Carrying out the Invention

An embodiment of the present invention is described by referring to diagrams as follows.

### (1): The Configuration of the Embodiment

### (1-1): The Configuration of an Optical Disk Drive

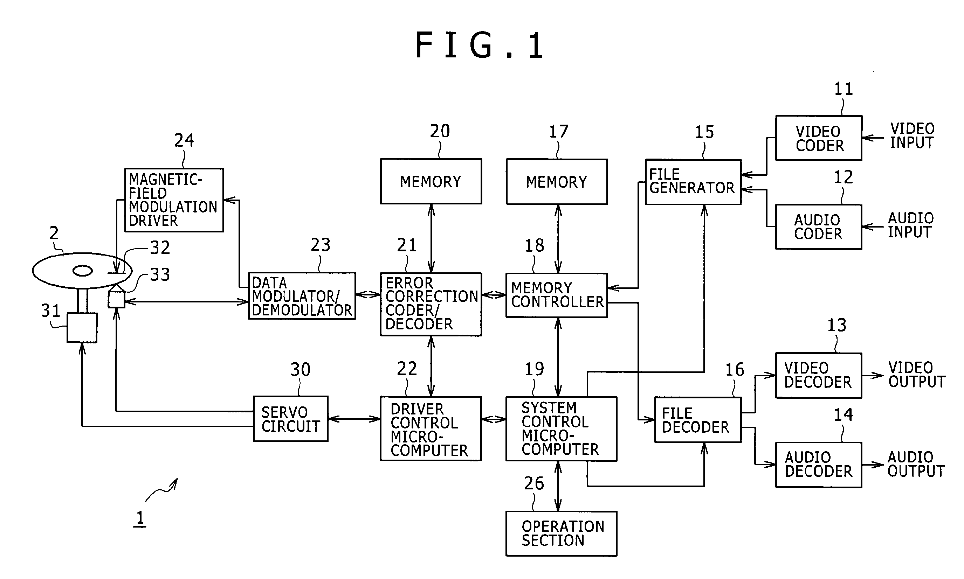

Fig. 1 is a block diagram showing an optical disk drive according to an embodiment of the present invention. In this optical disk drive 1, video and audio signals of an image-taking object are acquired by image-taking means and audio-acquisition means, which are not shown in the figure, and an image-taking result represented by the video and audio signals is recorded onto an optical disk 2. On the other hand, an image-taking result recorded on the optical disk 2 is reproduced from the optical disk 2 and output to a liquid crystal display panel serving as display means and a speaker serving as audio output means or output to an external apparatus. In the optical disk drive 1, video and audio signals representing a result of image taking are converted into streaming data having an MPEG (Moving Picture Experts Group) format before being recorded onto the optical disk 2 in a predetermined form of a file. In this embodiment, Quick Time abbreviated hereafter to QT is applied to the file format.

To put it in detail, in the optical disk drive 1, a video coder 11 converts a video signal representing a result of image taking from an analog signal into a digital video signal in an analog-to-digital process for generating the digital video signal. Then, the video coder 11 encodes the digital video data in a coding process conforming to the MPEG format in order to generate an elementary stream of the video data.

On the other hand, an audio coder 12 converts an audio signal representing a result of image taking from an analog signal into a digital audio signal in an analog-to-digital process for generating the digital audio signal. Then, the audio coder 12 encodes the digital audio data in a coding process conforming to the MPEG format in order to generate an elementary stream of the audio data.

At a recording time, a file generator 15 carries out a multiplexing process to multiplex the video and audio elementary streams output by the video coder 11 and the audio coder 12 respectively in order to generate a QT movie file in accordance with control executed by a system control microcomputer 19.

A memory controller 18 switches its operation from a recording time process to a reproduction time process or vice versa in accordance with control executed by a system control microcomputer 19. To be more specific, at a recording time, the memory controller 18 sequentially stores information on a temporary basis in a memory 17. The stored information includes a data stream of a QT movie file output by the file generator 15 and various kinds of data output by the system control microcomputer 19. Then, the memory controller 18 outputs the stored data to an error correction coder/decoder 21 for a process carried out by the error correction coder/decoder 21. At a reproduction time, on the other hand, a process opposite to the process of a recording time is carried out. That is to say, the memory controller 18 temporarily stores data output by the error correction coder/decoder 21 in the memory 17 and, then, supplies the stored data to a file decoder 16 and the system control microcomputer 19.

By the same token, the error correction coder/decoder 21 also switches its operation from a recording time process to a reproduction time process or vice versa in accordance with control executed by a system control microcomputer 19. To be more specific, at a recording time, the error correction coder/decoder 21 temporarily stores data output by the memory controller 18 in a memory 20 and adds error correction codes to the data. Then, the error correction coder/decoder 21 sequentially reads out pieces of aforementioned data stored into the memory 20 in a predetermined order in order to apply an interleave process to the data. Finally, the error correction coder/decoder 21 outputs a result of the interleave process to a data modulator/demodulator 23. At a reproduction time, on the other hand, a process opposite to the process of a recording time is carried out. That is to say, the error correction coder/decoder 21 temporarily stores pieces of data output by the data modulator/demodulator 23 into the memory 20 in a predetermined order before transferring the data from the memory 20 to the memory controller 18. In this way, the data output by the data modulator/demodulator 23 is subjected to a de-interleave process before the data is supplied to the memory controller 18. At that time, the error correction coder/decoder 21 also carries out an error correction process on the data on the basis of error correction codes added to the data at a recording time.

In the same way, the data modulator/demodulator 23 also switches its operation from a recording time process to a reproduction time process or vice versa in accordance with control executed by a system control microcomputer 19. To be more specific, at a recording time, the data modulator/demodulator 23 converts data output by the error correction coder/decoder 21 into serial data, modulates the serial data and outputs the modulated data to a magnetic-field modulation driver 24 or an optical pickup 33. At a reproduction time, on the other hand, the data modulator/demodulator 23 generates a clock signal from a reproduced signal output by the optical pickup 33 and, then, carries out a binary identification/demodulation process using the clock signal as a reference to generate reproduced data corresponding to serial data produced at a recording time. Finally, the data modulator/demodulator 23 supplies the reproduced data to the error correction coder/decoder 21.

In the case of a magneto-optical disk serving as the optical disk 2, under control executed by the system control microcomputer 19 at a recording time, a magnetic-field modulation driver 24 drives a magnetic-field head 32 in accordance with a modulated signal output by the data modulator/demodulator 23. The magnetic-field head 32 is provided at a position, which corresponds to the position of the optical pickup 33 on the other side of the optical disk 2, to sandwich the optical disk 2 in conjunction with the optical pickup 33. Provided at such a position, the magnetic-field head 32 applies a magnetic field, which is modulated in accordance with the modulated signal output by the data modulator/demodulator 23, to a target location on the surface of the optical disk 2. The target location is a location to which the optical pickup 33 radiates a laser beam. Thus, in the case of a magneto-optical disk serving as the optical disk 2, the optical disk drive 1 records a QT movie file or the like onto the optical disk 2 by adoption of a thermo-magnetic recording technique.

The optical disk 2 is a recording medium having the shape of a disk. In this embodiment, the optical disk 2 is a programmable optical disk such as an MO (Magneto-Optical) disk, a phase-change disk or the like. In accordance with control executed by a servo circuit 30, a spindle motor 31 drives the optical disk 2 into rotation under a velocity condition such as a CLV (Constant Linear Velocity), a CAV (Constant Angular Velocity) or a ZCLV (Zone Constant Linear Velocity) in dependence on the type of the optical disk 2.

The servo circuit 30 controls the operation of the spindle motor 31 on the basis of a variety of signals output by the optical pickup 33 in order to carry out processing of spindle control. In addition, the servo circuit 30 also applies tracking control and focus control to the optical pickup 33 as well. On top of that, the servo circuit 30 also moves the optical pickup 33 and the magnetic-field head 32 in a seek operation and further carries out other processing such as a focus search operation.

In accordance with a command issued by the system control microcomputer 19, a drive control microcomputer 22 controls operations carried out by the servo circuit 30. A typical operation carried out by the servo circuit 30 is the seek operation mentioned above.

The optical pickup 33 radiates a laser beam to the optical disk 2 and drives an optical reception device employed in the optical pickup 33 to receive a laser beam reflected by the optical disk 2. The optical pickup 33 carries out a process on the received laser beam and generates output signals for various kinds of control as a result of the process. In addition, the optical pickup 33 also outputs a reproduced signal, the level of which varies in accordance with a bit string or mark string generated on the optical disk 2. On top of that, the optical pickup 33 switches its recording operation from one kind of process to another in accordance with control executed by the system control microcomputer 19 at a recording time. To be more specific, in the case of a magneto-optical disk serving as the optical disk 2, the optical pickup 33 intermittently builds up the light quantity of the laser beam radiated to the optical disk 2. In this way, the optical disk drive 1 records a QT movie file or the like onto the optical disk 2 by adoption of the so-called pulse train method. In the case of a phase-change disk or another disk used as the optical disk 2, on the other hand, the optical pickup 33 builds up the light quantity of the laser beam radiated to the optical disk 2 from a reproduction-time quantity to a recording-time one in accordance with data output by the data modulator/demodulator 23. In this way, the optical disk drive 1 records a QT movie file or the like onto the optical disk 2 by adoption of a thermal recording method.

In the processing carried out in the optical disk drive 1 as described above, video and audio signals representing a result of image taking are subjected to a data compression process in the video coder 11 and the audio coder 12 respectively, being converted into a video elementary stream and an audio elementary stream respectively. Then, the file generator 15 converts the video and audio elementary streams into a QT movie file. Subsequently, the file generator 15 supplies the QT movie file to the optical pickup 33 or the optical pickup 33 as well as the magnetic-field head 32 by way of the memory controller 18, the error correction coder/decoder 21 and then the data modulator/demodulator 23. Finally, the magnetic-field head 32 and the optical pickup 33 record data of files including a QT movie file and an index file onto the optical disk 2. An index file is a file containing indexes used for setting QT movie files recorded on the optical disk 2 as files each to serve as an object of management.

In addition, in the optical disk drive 1, a reproduced signal output by the optical pickup 33 is processed in the data modulator/demodulator 23 to generate reproduced data. The reproduced data is further processed in the error correction coder/decoder 21 to reproduce files such as a QT movie file and an index file from the optical disk 2. The reproduced QT movie file and index file are output from the memory controller 18.

The file decoder 16 receives data of the QT movie file from the memory controller 18, splitting the data into an output elementary stream of video data and an output elementary stream of audio data. A video decoder 13 carries out a data decompression process on the elementary stream of video data, outputting the result of the data decompression process to display means and/or an external apparatus, which are not shown in the figure. On the other hand, an audio decoder 14 carries out a data decompression process on a stream output by the file decoder 16 as the aforementioned elementary stream of audio data, outputting the result of the data decompression process to audio output means and/or an external apparatus, which are not shown in the figure. In this way, an image-taking result reproduced from the optical disk 2 in the optical disk drive 1 can be obtained and monitored by using the display and audio output means.

It is to be noted that the optical disk drive 1 has an interface for connecting the optical disk drive 1 to an external apparatus such as a computer. Thus, instead of recording a result of image taking onto the optical disk 2, the optical disk drive 1 is also capable of recording data received from the computer by way of the interface onto the optical disk 2 and outputting a file reproduced from the optical disk 2 to the computer through the interface.

An operation section 26 includes a variety of operation devices provided for the optical disk drive 1. The operation section 26 also has a touch panel placed on a liquid crystal display panel. The operation section 26 notifies the system control microcomputer 19 of a variety of operations carried out by the user.

The system control microcomputer 19 is a computer for controlling operations in the entire optical disk drive 1. By execution of a predetermined processing program stored in a memory not shown in the figure, the system control microcomputer 19 applies a seek operation to the optical pickup 33 to move the optical pickup 33 to the innermost circumference of the optical disk 2 when the optical disk 2 is mounted on the optical disk drive 1. The optical pickup 33 then reproduces management information of a file management system for the optical disk 2 from the inner circumference. Subsequently, the system control microcomputer 19 acquires the reproduced management information from the memory controller 18 and stores the information in an embedded memory. From the management information, the system control microcomputer 19 is capable of finding the address of each file recorded on the optical disk 2 and a free area on the optical disk 2.

A processing program to be executed by the system control microcomputer 19 is a pre-installed program. In place of the pre-installed processing program, a processing program can also be downloaded from a source through a network into a memory. As another alternative, a processing program can also be installed from a recording medium by reproducing the program from the medium. By the way, the recording medium can have any one of a variety of types. Examples of the recording medium are an optical disk, a magnetic tape and a memory card.

If an index file has been recorded on the optical disk 2, the system control microcomputer 19 searches the management information acquired as described above for a location at which the index file has been recorded. Then, the system control microcomputer 19 applies a seek operation to the optical pickup 33 in order to move the optical pickup 33 to the recording location of the index file and reproduce the index file from the location. The reproduced index file is then obtained from the memory controller 18 and stored in an embedded memory. Thus, by using the management information in this embodiment, it is possible to improve the overall operability related to processing carried out on files recorded on the optical disk 2. It is to be noted that, by recording the index file at a location in close proximity to the innermost side of the user area, the build-up time can be shortened.

That is to say, in response to an operation carried out by the user, the index file allows the system control microcomputer 19 to display thumbnails or the like on the liquid crystal display panel for a monitoring purpose in order to introduce contents of QT movie files recorded on the optical disk 2 to the user. Then, by referring to the introduced contents of QT movie files, the user can select a file and the system control microcomputer 19 controls the whole operation by using management information associated with the selected file to reproduce the selected file.

In addition, when the user issues a command to record results of image taking onto the optical disk 2, the management information is searched for a free area on the optical disk 2 and the optical pickup 33 is subjected a seek operation in order to move the optical pickup 33 to the free area. Then, the results of image taking are sequentially recorded into the free area. In addition, the management information stored in a memory is updated in order to reflex the recording of the image-taking results as a QT movie file. Before the optical disk 2 is ejected off from the optical disk drive 1, the updated management information is transferred from the memory to the optical disk 2 in order to eventually update the management information recorded on the optical disk 2. It is to be noted that the updated management information is transferred from the memory to the optical disk 2 by way of the memory controller 18 and the error correction coder/decoder 21.

In the processes described above, the system control microcomputer 19 provides the file generator 15 with various kinds of information necessary for generation of a QT movie file to be recorded onto the optical disk 2. In addition, information necessary for generation of an index file is also acquired from the file generator 15. Then, the index file stored in the memory is also updated to reflect the new QT movie file recorded onto the optical disk 2 on the basis of the acquired information, the information provided to the file generator 15, and other information. Before the optical disk 2 is ejected off from the optical disk drive 1, the updated index file is transferred from the memory to the optical disk 2 in order to eventually update the index file recorded on the optical disk 2 in the same way as the process to update the management information as described above.

In addition, when the user issues a command to edit a file already recorded on the optical disk 2, the index file as well as the management information, which have been stored in the memory, are updated in order to reflect a result of the edit process and, then, the updated index file as well as the updated information are transferred from the memory to the optical disk 2 in the same way as the updating processes carried out at a recording time.

As described above, in the optical disk drive 1 for recording video and audio signals representing a result of image taking onto the optical disk 2, QT movie files are recorded on the optical disk 2 in an external reference format. That is to say, the video and audio signals are recorded on the optical disk 2 as their video and audio files. In addition, resource files used for managing video and audio files is also recorded on the optical disk 2. Thus, video, audio and resource files are each recorded onto the optical disk 2 as a QT movie file.

### (1-2): Index File

An index file is also recorded on the optical disk 2 much like a variety of files including QT movie files. The index file is a file for recording information managed by the file management system of the optical disk 2 as information necessary for generation of a file. The information necessary for generation of a file includes the address of the recording location of the file, the name assigned to the file and the length of the file. To be more specific, the index file includes information for introducing every QT movie file recorded on the optical disk 2 as an object of management. The index file thus allows one of QT movie files recorded on the optical disk 2 to be selected and the selected QT movie file to be reproduced from the optical disk 2 on the basis of the file management system. As a result, a desired QT movie file can be selected correctly in a short period of time even if a large number of QT movie files have been recorded on the optical disk 2 so that allowing operability can be enhanced.

In this embodiment, the index file includes information for introducing every QT movie file as described above. To put it concretely, the information for introducing a QT movie file is information selected and extracted from information stored in the QT movie file as extracted information of the information stored in the QT movie file. In the following description, the information selected and extracted from information stored in a QT movie file is referred to as extracted information of QT movie file. Thus, the index file is generated as a sequence of entries, which are each a block including the extracted information of a QT movie file. As a result, the contents of every QT movie file can be grasped with ease and in a short period of time.

The extracted information stored in an index file are divided into data groups, which are classified by attribute to form the same structure as the structure of a QT movie file recorded on the optical disk 2. Thus, the index file can be generated and processed by using the configuration of the optical disk drive 1, which generates QT movie files, as it is. By making the configuration of the optical disk drive 1 common to generation of an index file and generation of a QT movie file, the configuration can be simplified by utilizing common elements.

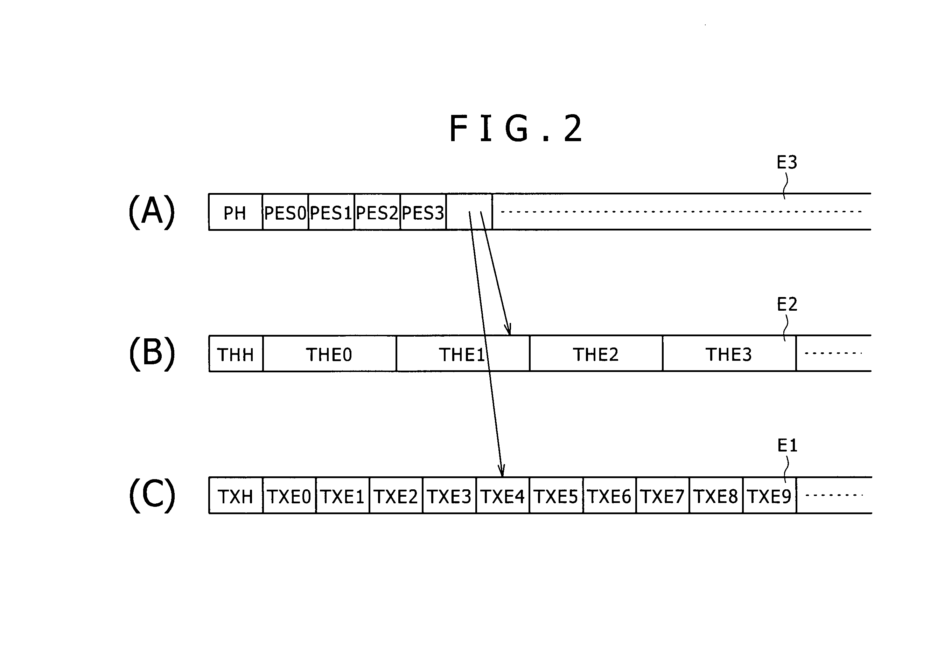

To put it concretely, in conformity with the structure of a QT movie file, the extracted information stored in the index file as the extracted information of actual data stored in QT movie files are apportioned to a text entry file E1, a thumbnail picture entry file E2 and a property entry file E3 as shown in Fig. 2. The structure of the index file thus comprises these entry files E1 to E3 and resource files, which are not shown in the figure. The resource files contain management information of the entry files E1 to E3.

The entry file E1 includes a header TXH at the beginning of the entry file E1 as a header indicating the attribute of the entry file E1. By the same token, the entry file E2 includes a header THH at the beginning of the entry file E2 as a header indicating the attribute of the entry file E2. In the same way, the entry file E3 includes a header PH at the beginning of the entry file E3 as a header indicating the attribute of the entry file E3. Each of the headers TXH, THH and PH is followed by a sequence of entries, which each occupy a slot having a fixed length.

The text entry file E1 contains a disk title and a sequence of character strings each composed of data occupying a slot to represent the title of typically a file serving as an object of management. The thumbnail picture entry file E2 contains the disk title and a sequence of standstill pictures each illustrating a thumbnail picture occupying a slot to represent the contents of typically a file serving as an object of management.

The property entry file E3 contains the disk title and a sequence of pieces of information each occupying a slot allocated to a file serving as an object of management. The information stored in a slot comprises extracted information and entry management information. The extracted information is binary data set for the file serving as an object of management as data representing attributes of the file. To put it concretely, the information stored in each slot serving as an entry of the property entry file E3 includes information for identifying a management-object file associated with the entry and information showing relations with the other entry files E1 and E2 as shown by arrows in Fig. 2.

On the other hand, a resource file contains management information, attributes of the index file and other information. An example of the management information is the position of the start of every slot in each of the entry files.

Thus, the index file provides the user with thumbnail pictures stored in the thumbnail picture entry file E2 and file titles stored in the text entry file E1. The user then enters a selected thumbnail picture and file title. The file management system is thus capable of finding the name of a file indicated by the selected thumbnail picture and file title on the basis of a description a property entry. These features improve operability offered to the user.

Thus, in the optical disk drive 1, the system control microcomputer 19 acquires compressed video and audio data from the file generator 15 and decodes the acquired data before generating a thumbnail picture by carrying out a pixel thinning process on the decoded video data. A thumbnail picture entry file E2 is generated as a file generated to contain a generated thumbnail picture. In addition, from information held in the file management system of the optical disk 2 as information on a file serving as an object of management, data of a title is further generated in accordance with setting made by the user. A generated text entry file E1 is a file generated to contain generated data of a title. On the other hand, a property entry file E3 is generated in response to an operation carried out by the user. Furthermore, a resource file is also generated for each of these entry files E1 to E3.

It is to be noted that extracted information may vary in dependence on the file managed by using the index file as a file serving as an object of management. In this case, a text entry and a thumbnail picture entry cannot be provided in the index file in some cases in dependence on the file serving as an object of management. However, a property entry must always be provided. In addition, for example, an entry file related to introduction of a file serving as an object of management may thus need to be generated in some cases as an entry file other than the text entry file and the thumbnail picture entry file.

### (1-3): Properties

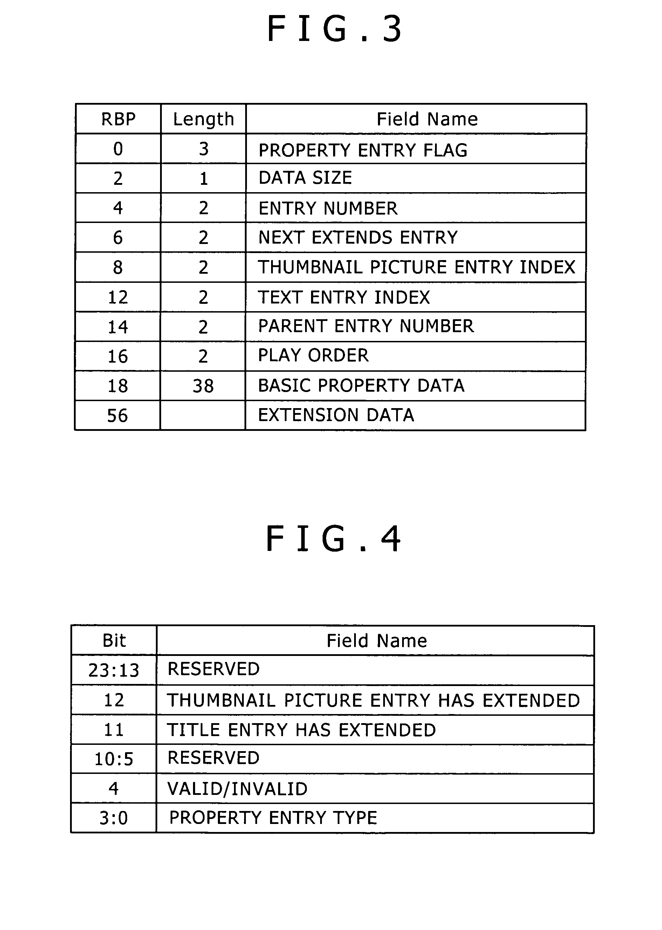

Fig. 3 is diagram showing the structure of actual data of a property set in every property entry associated with a file. A property comprises a property entry header, basic property data and extension data. The property entry header contains property attributes needed in management of the file serving as an object of the management based on a layer structure. To put it concretely, starting from the beginning of the property header, the header includes property entry flags, a property data size, an entry number, a next extends entry, a thumbnail picture entry index, a text entry index (or a title picture entry index), a parent entry number and a play order.

The property entry flags indicate entry attributes. That is to say, as shown in Fig. 4, bits 0 to 3 of the property entry flags indicate a property entry type, which is the type of the entry.

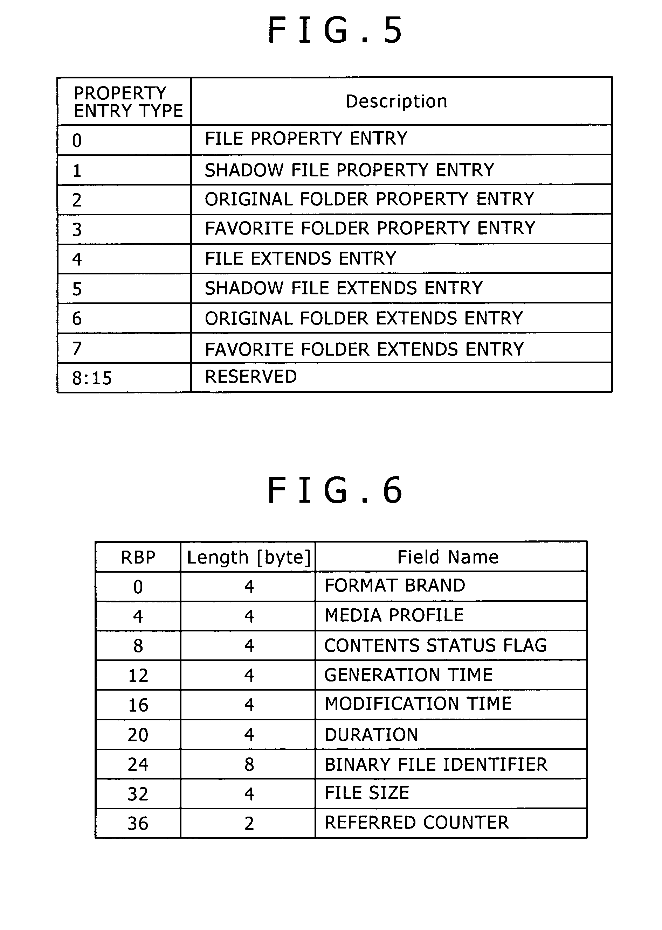

As shown in Fig. 5, a property entry type of 0 indicates that the property entry is a file property entry. A file property entry is a property entry indicating that the management object associated with the property entry is a file. This property entry type of 0 is set if the property entry is the first property entry assigned to the file associated with this first property entry and subsequent extends entries.

A property entry type of 1 indicates that the property entry is a shadow file property entry. A shadow file property entry is a property entry used in a process of cataloging an entry such as an alternate thumbnail picture entry or an alternate text entry in addition to a process of cataloging an entry such as a thumbnail picture entry or a text entry by using an original property entry. Thus, in this embodiment, for a file property entry serving as the original property entry and also for an original folder property entry and a favorite folder property entry, which are to be described later, a shadow file property entry is provided so that, for one file or one folder, a plurality of entries having different types can be cataloged. Examples of the entries having different types are a thumbnail picture entry and a text entry. Any one of the entries having different types can be selected and used in an application. However, for example, an icon serving as a shortcut of a thumbnail picture entry of these entries having different types can be used in a way conceivably different from an original icon. It is to be noted that, in a shadow file property entry, the entry number of the original property entry is set as a parent entry number, which is an identifier used for identifying a parent entry to be described later. Thus, in the index file, a relation between a shadow file property entry and its original property entry is indicated by the shadow file property entry. As a result, the embodiment offers good operability in comparison with the conventional system.

A property entry type of 2 indicates that the property entry is an original folder property entry. An original folder property entry is an entry corresponding to an original folder, which serves as a basic location for holding a file. An original folder of a file is a folder in which the file is stored initially. In addition, the original folder property entry is applied even if extracted information of a disk title assigned to a root folder related to the disk title exists.

A property entry type of 3 indicates that the property entry is a favorite folder property entry. A favorite folder property entry is an entry corresponding to a favorite folder, which is set as a group of entries collected from already cataloged entries in order for the user to collect files consciously for a certain purpose by keeping relations between original folders each associated with an already cataloged entry and their files as they are. Thus, in the index file, for a favorite folder property entry, by setting links to cataloged property entries, files recorded on the recording medium can be managed by using both a layer structure of original folders and a layer structure of favorite folders.

Other values of the property entry type indicate extends entries of a file property entry, a shadow file property entry, an original folder property entry and a favorite folder property entry. The extends entries are a file extends entry, a shadow file extends entry, an original folder extends entry, and a favorite folder extends entry for the file property entry, the shadow file property entry, the original folder property entry, and the favorite folder property entry, respectively. An extends entry is used as follows. In the index file, if extracted information of a file associated with a file property entry and extracted information of a folder associated with a folder property entry as the folder of files cannot be accommodated in the property entry, the file and the extracted information of the folder can be cataloged by using a plurality of property entries. In this case, the first one of the property entries is a property entry indicated by one of the property entry types described above and the other ones of the property entries are the extends entry corresponding to the first property entry. This feature also applies to thumbnail picture entries and text entries as well. That is to say, if a thumbnail picture cannot be accommodated in a thumbnail picture entry, the thumbnail picture is cataloged by extending the thumbnail picture over a plurality of thumbnail picture entries. By the same token, if a text cannot be accommodated in a text entry, the text is cataloged by extending the text over a plurality of text entries. If a thumbnail picture is cataloged by extending the thumbnail picture over a plurality of thumbnail picture entries in the thumbnail picture entry file, extends entries each associated with one of the thumbnail picture entries are used even if the extracted information of a file associated with the thumbnail picture or the extracted information of a folder associated with the thumbnail picture as a folder of files can be accommodated in one file property entry or folder property entry associated with the extends entries. This feature also applies to a text cataloged by extending the text over a plurality of text entries in the text entry file. If a property entry and extends entries accompanying the property are used as described above, the first entry serving as the property entry is a property entry indicated by one of the property entry types described above and the extends entries for remaining properties are each an extends entry corresponding to the property entry. Thus, the index file allows simplification of processing to generate entries each having a fixed uniform length for accommodating data with a predetermined certain amount. In addition, the index file allows operations to be carried out on entries each having a fixed uniform length in a flexible manner.

It is to be noted that the property entry type can be set at any one of reserved values, which are different from the values described above.

Fourth bit of the property entry flags shown in Fig. 4 is a valid/invalid flag indicating whether the entry is valid or invalid. Thus, in this embodiment, when a QT movie file is deleted, for example, the index file can be updated by merely changing the valid/invalid flag in fourth bit from a valid value to an invalid value to reflect the deletion of the QT movie file.

Fifth bit to tenth bit of the property entry flags shown in Fig. 4 are each a reserved bit. Eleventh bit of the property entry flags shown in Fig. 4 is a title entry flag for indicating whether or not the title entry for a title has extended to accommodate the title. By the same token, twelfth bit of the property entry flags shown in Fig. 4 is a thumbnail picture entry flag for indicating whether or not the thumbnail picture entry for a thumbnail picture has extended to accommodate the thumbnail picture. Thirteenth bit to twenty-third bit of the property entry flags shown in Fig. 4 are each a reserved bit.

The property entry header shown in Fig. 3 includes a property data size, which indicates the amount of data representing the property. The property data size is followed by an entry number assigned to this property entry. The entry number assigned to a property entry is a number for identifying the property entry. The entry number assigned to a property entry is a code unique to the property entry. In this embodiment, the entry number assigned to a specific entry in an entry file is a number obtained as a result of progressively counting the number of entries starting with the first entry in the entry file and ending with the specific entry in an order starting from the first entry to which an entry number of 1 is assigned. The entry number is followed by a next extends entry, which is an entry number assigned to an extends entry of this file property entry. The next extends entry is followed by a thumbnail picture entry index, which is an entry number assigned to a thumbnail picture entry associated with this property entry. The thumbnail picture entry index is followed by a text entry index (or a title picture entry index), which is an entry number assigned to a text entry associated with this property entry. If no extends entry of this property entry exists for this property entry, the next extends entry index is set at a special code such as 0. By the same token, if no thumbnail picture entry is associated with this property entry, the thumbnail picture entry index is set at the special code. In the same way, if no text entry is associated with this property entry, the text entry index (or the title picture entry index) is set at the special code. Thus, the index file can be used for finding a thumbnail picture entry from the thumbnail picture entry index and a text entry from the text entry index (or the title picture entry index). In addition, the index file can be used for identifying an extends entry from the next extends entry described above and any succeeding extends entry from the next extends entry included in the preceding extends entry. By tracing extends entries successively identified in this way, extracted information of a QT movie file and extracted information of its folder can be found.

The text entry index (or the title picture entry index) is followed by a parent entry number, which is an entry number assigned to a parent folder. A parent folder is a folder for accommodating QT movie files and any other folder, which each serve as an object of management. Thus, a parent entry number is provided as an entry number used for defining a layer structure of the management objects. The parent entry number can also be set at an entry number assigned to the property entry of an original folder. In this way, the index file allows a virtual layer structure to be constructed as a layer structure different from a directory structure which actually exists in the file system. Thus, since the parent entry number is information pointing from a layer at a lower level to a layer at a higher level, the parent entry number is always an entry number assigned to the property entry associated with a folder and never an entry number assigned to the property entry associated with a file as far as definition of a hierarchical structure of the management objects is concerned.

Aside from the above relation, in the case of a property entry type indicating a shadow file property entry, the parent entry number of the shadow file property entry is set at an entry number assigned to an original property entry of a file serving as an object of management. Thus, in the case of a shadow file property entry, a relation with an original property entry is described by the parent entry number. That is to say, in the index file, a relation between a shadow file property entry and its original property entry can be indicated by effectively utilizing the parent entry number, which is naturally provided as an entry number used for defining a hierarchical structure of the management objects.

The parent entry number is followed by a play order, which is information used for indicating a relation between entries. To be more specific, the play order of an entry is information showing a reproduction order of the entry or the file associated with the entry.

The play order is followed by basic property data including a format brand, a media profile, contents status flags, a generation time, a modification time, a duration, a binary file identifier, a file size and a referred counter as shown in Fig. 6.

The format brand is information showing the format of the file serving as an object of management. The format of the file serving as an object of management is indicated by a file-name extension of the file or information stored in the file. The media profile of the file serving as an object of management typically includes the Kordic types of the elementary streams of audio and video data for the file, the bit rates of the file, the number of frames in the video data, the sampling frequency of the audio data and horizontal/vertical sizes of the video data. The contents status flags of the file serving as an object of management are flags indicating whether or not information such as the title, thumbnail picture and introduction of the file exists.

The generation time of the file serving as an object of management is a date/time on/at which the file was generated. The modification time of the file serving as an object of management is a date/time on/at which the file was modified. The duration of the file serving as an object of management is time it takes to reproduce the file.

The binary file identifier of the file serving as an object of management is information on a location at which the file exists. In this embodiment, the binary file identifier of the management-object file recorded on the optical disk 2 is the file name of the file or the name of a folder including the file. In the case of a property entry associated with the root directory related to the disk title, the property entry is naturally associated with no file. Thus, the binary file identifier of such a property entry should be set at a value, which does not have any meaning. This setting of the binary file identifier also applies to a property entry associated with a folder. In the case of this embodiment, however, a file name assigned to a moving picture file recorded on the optical disk 2 can be described in the binary file identifier of the file. Thus, the binary file identifier of the root directory and also the binary file identifier of a folder can be used for cataloging a moving picture file. In addition, in this case, with such association, the cataloged moving picture file can be used as guidance to information on usage of the optical disk 2 right after the loading of the optical disk 2 or used for storing a special title to be reproduced right after the loading of the optical disk 2. As a result, the index file offers operability, which is good in comparison with the conventional system.

The file size of the file serving as an object of management is the size of the file. Thus, the index file makes it possible to quickly determine whether or not the configurations of hardware and software for reproducing file serving as an object of management from the optical disk 2 are capable of processing the file. It is to be noted that this determination process is carried out on the basis of not only the file size, but also a data transfer rate or also the file size, the data transfer rate and the format of the file serving as an object of management. The data transfer rate is defined as a ratio obtained as a result of dividing the file size by the duration. Thus, the index file offers operability, which is good in comparison with the conventional system.

The referred counter is used when the file serving as an object of management refers to child files. The referred counter is the number of child files referred to by the file serving as an object of management. In addition, with regard to this reference relation between the file serving as an object of management and child files, in the case of a QT file conforming to the external reference format, for example, a resource file may refer to a media data file in some cases.

The extension data of a property entry is a variety of fields for extending the property entry itself. It is to be noted that, if the fields described in the extension data cause the size of the property entry to exceed the amount of data corresponding to the fixed uniform length of the property entry, the data of the excessive fields is described in the aforementioned extends entries of the property entry.

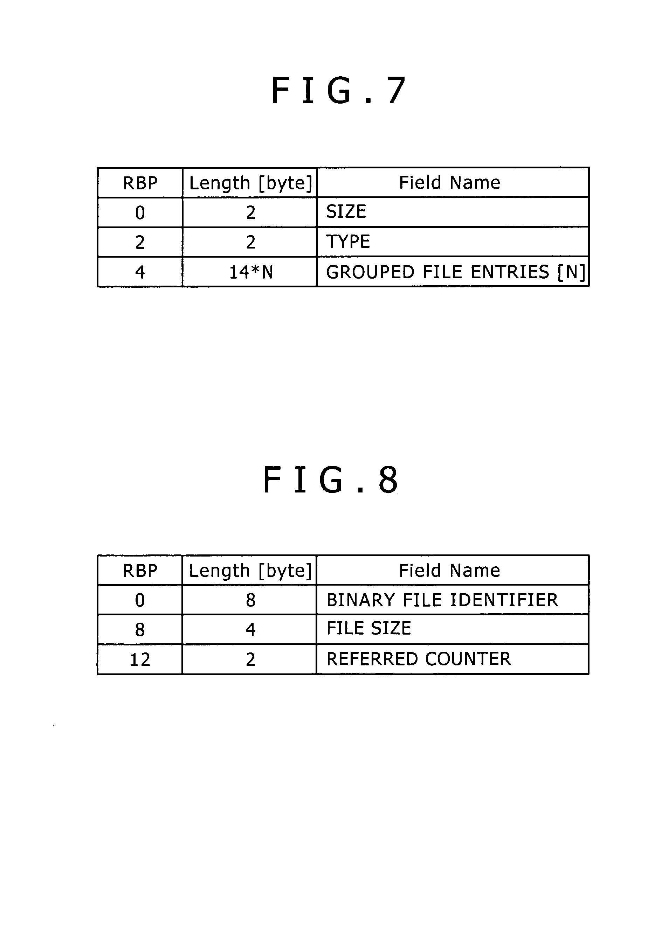

Fig. 7 is a diagram showing the structure of in-group file management list extension data, which is one of the fields of the extension data. The in-group file management list extension data is applied to collective management of a plurality of files, which are processed at the same time at a reproduction time by using a single property entry representing the files. To put it concretely, in the index file, by using the in-group file management list extension data, a QT file formed from a plurality of files typically by adoption of the external reference format can be cataloged collectively as a single property entry corresponding to the resource files of the QT file. Thus, the operability can be enhanced. In addition, by collectively cataloging the QT file, the entries to be cataloged in the index file as entries associated with the individual files can be eliminated. By such elimination of entries, the number of entries included in the index file can be reduced. As a result, the operability can be enhanced.

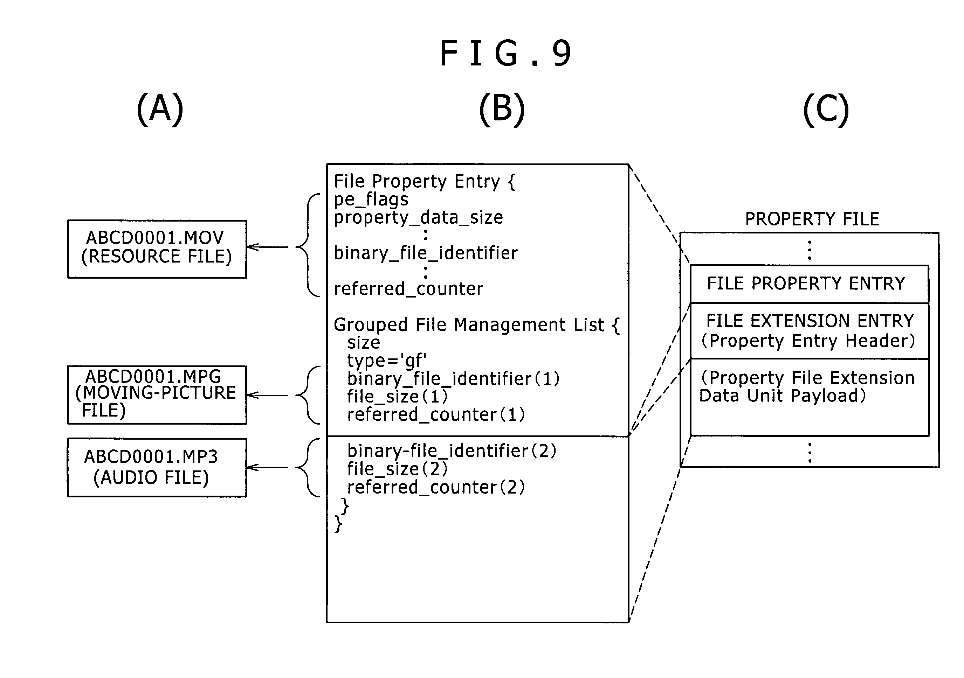

The in-group file management list extension data includes the size of the extension data and a type indicating that the extension data is the in-group file management list extension data. The type of the in-group file management list extension data is followed by group file entries, which are each associated with a relevant file. As many group file entries as relevant files are arranged sequentially. The structure of a group file entry associated with a relevant file is shown in Fig. 8. The group file entry associated with a relevant file includes a binary file identifier pointing to the relevant file. The binary file identifier is followed by a file size, which is followed by a referred counter. The referred counter is the number of files referred to by the relevant file. The binary file identifier, the file size and the referred counter are provided in the same format as the binary file identifier, the file size and the referred counter, which are explained earlier by referring to Fig. 6.
(B) of Fig. 9 is a diagram showing entries described in the C language as entries recorded for a relevant moving picture file and a relevant audio file in a property entry associated with a resource file of a QT file formed by using in-group file management list extension data. The resource file, the relevant moving picture file and the relevant audio file are shown in (A) of Fig. 9. The binary file identifier of the basic property data of the property entry points to the resource file. The file size of the basic property data is the size of the resource file and the referred counter of the basic property data is the number of files referred to by the resource file. The first entry of grouped file entries in the in-group file management list extension data includes a binary file identifier, which points to the moving picture file. The binary file identifier is followed by a file size, which is the size of the moving picture file. The file size is followed by a referred counter, which is the number of files referred to by the moving picture file. By the same token, the second entry of the grouped file entries in the in-group file management list extension data includes a binary file identifier, which points to the audio file. The binary file identifier is followed by a file size, which is the size of the audio file. The file size is followed by a referred counter, which is the number of files referred to by the audio file.

In addition, a property entry file shown in (C) of Fig. 9 contains the in-group file management list extension data associated with a property entry and a file extends property entry.

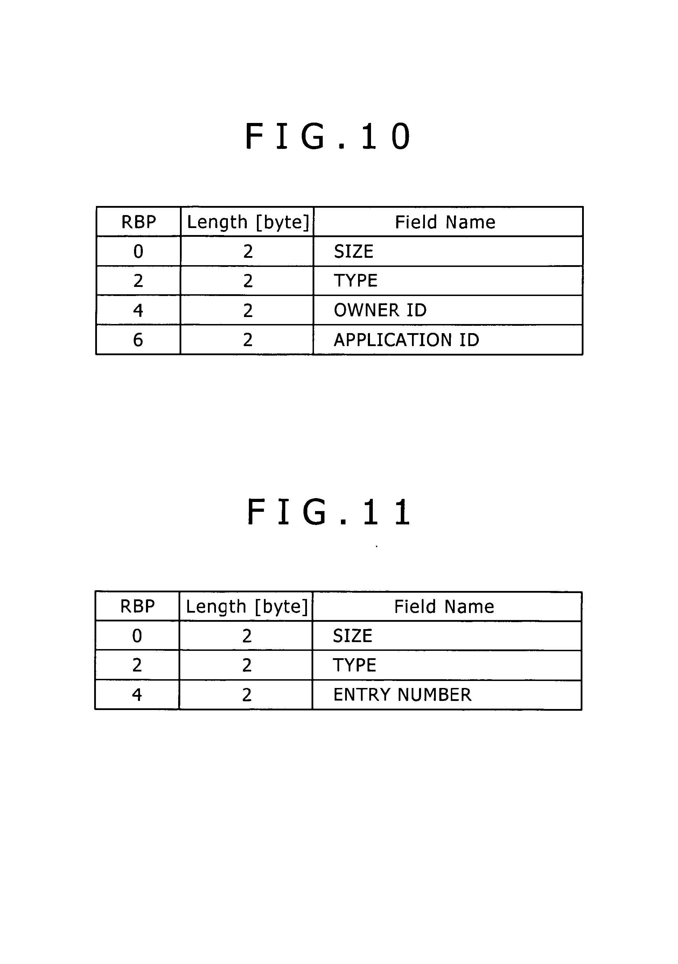

Fig. 10 is a diagram showing the structure of disk title property extension data, which is a kind of extension data. The disk title property extension data is provided when the binary file identifier of the basic property data included in a property entry of a disk title related to a root directory as described above is set to point to a file. That is to say, the disk title property extension data is provided when an entry associated with a disk title is set to point to a moving picture file.

The disk title property extension data includes the size of the disk title property extension data and the type of the disk title property extension data. The type is followed by an owner ID, which is followed by an application ID. When the binary file identifier of the basic property data is set to point to a file, the owner ID is set at the identification code of an owner involved in the setting. The application ID is an identification code used for identifying an application related to the file pointed to by the binary file identifier. It is to be noted that an owner ID set at 0 indicates that cataloging has been carried out by the user of the optical disk drive 1. Thus, if video and audio files pointed to by the binary file identifier of the basic property data are to be automatically reproduced at a loading time of the optical disk 2, for example, the index file cancels the reproduction of these files with the owner ID taken as a reference. In addition, an application identified by the application ID is reproduced. As a result, the operability can be further enhanced.

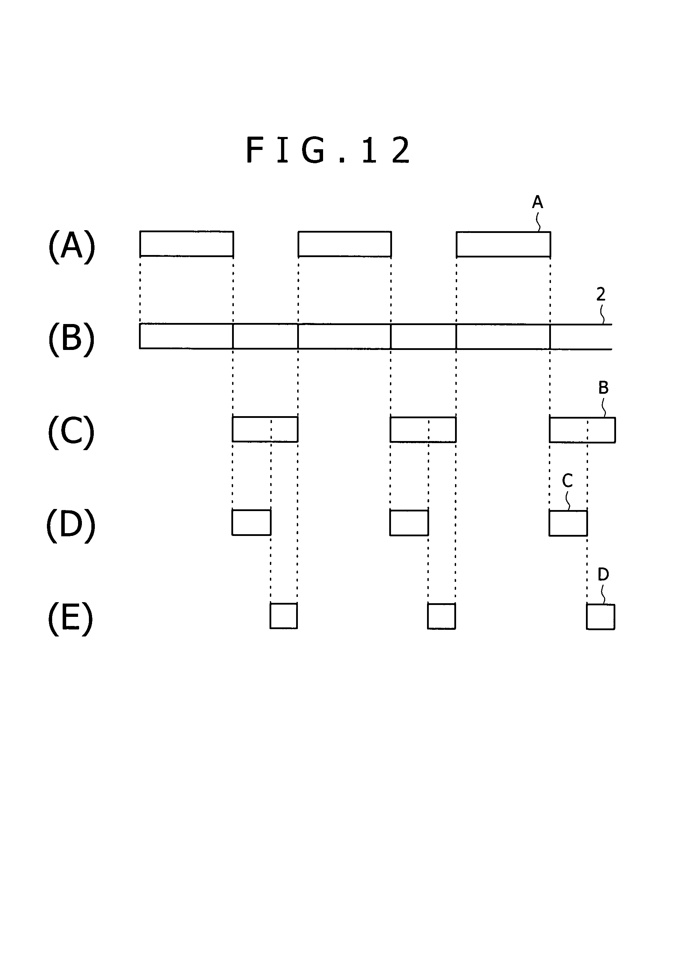

Fig. 11 is a diagram showing the structure of interfile relation information extension data, which is a kind of extension data. This file management information using the interfile relation information extension data is applied to a case in which there is another file to be also updated in processing such as operations to record and/or update a file serving as an object of management. To put it concretely, as shown in Fig. 12, a video data file A shown in (A) of Fig. 12 and a dummy data file B shown in (C) of Fig. 12 are to be recorded into a contiguous area on the optical disk 2 in predetermined data units by alternating the data units of the video data file A with the data units of the dummy data file B as shown in (B) of Fig. 12. In this case, however, in order to allow video data to be obtained as video data without interruptions in a process to reproduce the video data file A, after the video data file A has been recorded into the contiguous area, a post-recording file C is divided into portions, which are then each recorded into a free area originally allocated to a data unit of the dummy data file B as shown in (D) of Fig. 12. In the case of the video data file A and the post-recording file C, which are recorded in the recording area by adoption of an interleaving technique in this way, the video data file A and the post-recording file C can be reproduced from the recording area without interruptions.

By the way, an available region left in each free area after recording a portion of the post-recording file C into the free area is managed as another dummy data file D shown in (E) of Fig. 12 when a post-recording process is carried out repeatedly by repeating processing such as operations to delete and update the post-recording file C. When the post-recording file C is deleted, for example, each free area used to be occupied by a portion of the post-recording file C is added to an available region. That is to say, the state of each free area needs to be restored from that shown in (D) of Fig. 12 to that shown in (C) of Fig. 12. If the state of each free area is not restored in this way, the free areas provided in advance between the data units of the video data file A can no longer be used as areas for recording the post-recording file C after the post-recording process has been carried out repeatedly.

If the above relation exists, the interfile relation information extension data is provided in the property entry of the post-recording file C associated with the real data.

The interfile relation information extension data includes the size of the interfile relation information extension data and a type indicating that the extension data is interfile relation information extension data. The interfile relation information extension data also includes the entry number of a property entry associated with the relevant file, which is the file D in the case of the example shown in Fig. 12. Thus, this embodiment enhances the operability to a level higher than the conventional system.

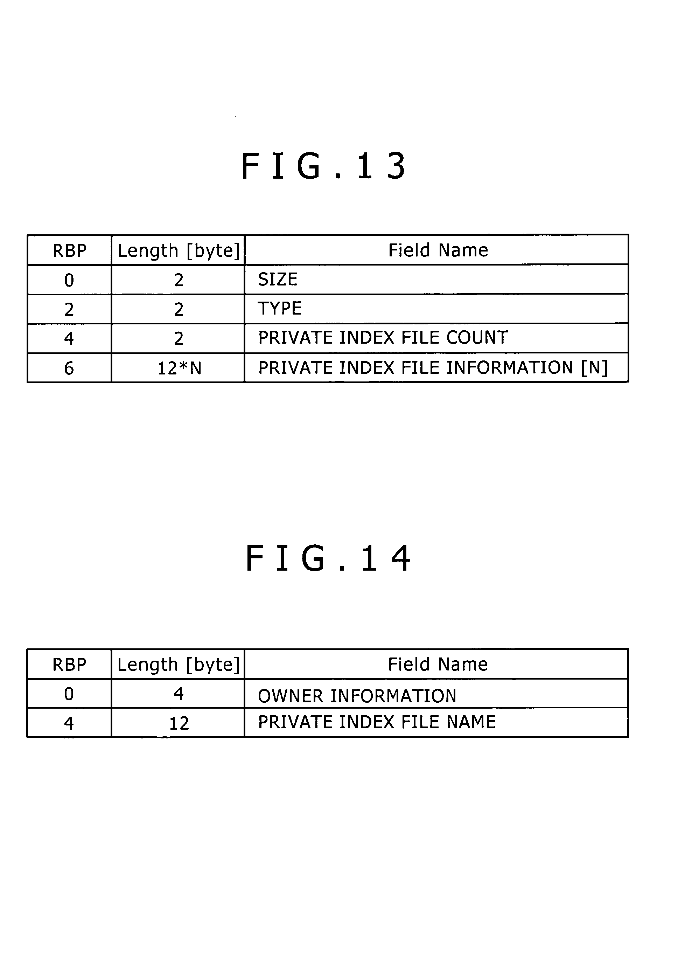

On the other hand, Fig. 13 is a diagram showing the structure of a private index file list, which is a kind of extension data. Fig. 14 is a diagram showing detailed fields of the private index file list. It is sufficient to provide one private index file list for every index file. Normally, the private index file list is provided in an original folder property entry associated with the root directory of the recording medium.

Since an index file introduces files recorded on the optical disk 2, it is predicted that a variety of applications uses the index file. It is thus necessary to provide an index file that can be used by any application. However, the type of extracted information required by an application varies from application to application. For this reason, an index file dedicated for an application may be needed for some cases in dependence on the application. Therefore, this embodiment allows a private index file to be cataloged as an index file peculiar to an application.

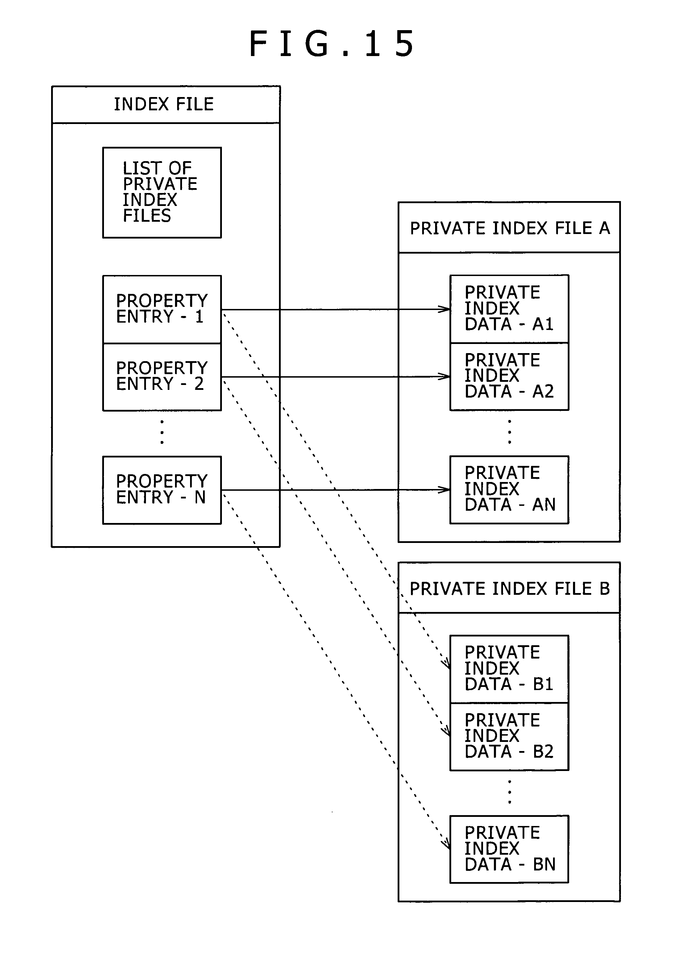

Thus, a private index file for an application is an index file containing collected extracted information for the application. A private index file can be cataloged on the optical disk 2 for every application. As shown in Fig. 15, a private index file has the QT file structure as is the case with an ordinary index file. That is to say, a private index file contains pieces of private index data, and the pieces of private index data each correspond to a property entry of an index file. Each piece of private index data is a cataloged extracted information. Thus, every piece of private index data is associated with a corresponding property entry of an index file.

Each piece of private index data in a private index file has a fixed uniform length. Thus, in the same way as a property entry of an index file, the beginning of any specific private index data can be found from the beginning of the first private index data, an entry number assigned to the property entry corresponding to the specific private index data and the fixed uniform length of the private index data. In the example shown in Fig. 15, private index data is cataloged in each private index file for every property entry of the index file. It is to be noted, however, that private index data is provided only if the private index data is needed by an application.

The private index file list is a list of private index files each used for cataloging such pieces of private index data. As shown in Fig. 13, the private index file list serving as extension data contains the size of the extension data, the type indicating that the extension data is a private index file list. The type of the private index file list is followed by a private index file count, which is the number of private index files included on the list. The private index file count is followed by as many pieces of information on a private index file as private index files included on the private index file list. That is to say, the number of pieces of private index file information is equal to the private index file count.

As shown in Fig. 14, each piece of a private index file information includes owner information and a private index file name. The owner information is information on an owner identifying an application, which utilizes this private index file. The private index file name is the name of the private index file.

By the way, utilization of such private index files indicates that the optical disk 2 is used in a variety of applications. If a file is deleted in a specific application and a property entry corresponding to the deleted file is de-cataloged from the index file, however, the private index file for the specific application can also be updated in the same way as the index file. Nevertheless, in some cases, the private index file for another application cannot always be subjected to a process corresponding to the operation to de-catalog an entry corresponding to the deleted file from the index file.

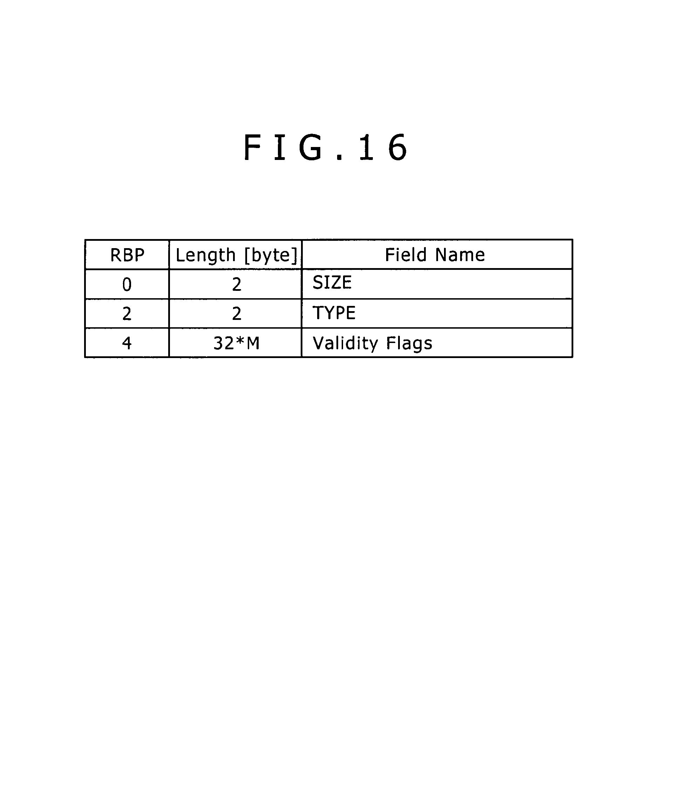

In order to solve the above problem, as another kind of extension data, the index file also includes private data status flag groups each shown in Fig. 16. The private data status flag groups are arranged in the same order as the pieces of private index file information described earlier. The private data status flag groups each include the size of the extension data, the type indicating that the extension data is private data status flags and validity flags.

Let us assume that a file is deleted by a specific application program and a property entry corresponding to the deleted file is de-cataloged from the index file as described above. Then, the file is reused by another application program and the property entry associated with the reused file is re-cataloged in the index file. In this case, the validity flag included in a specific private data status flag group for a specific private index file associated with the specific application program as a validity flag for the file is set at valid status while the validity flag included in another private data status flag group for another private index file associated with the other application program as a validity flag for the file is set at invalid status. Thus, this embodiment enhances the operability to a level higher than the conventional system.

### (1-4): Processing of Index Files in the System Control Microcomputer

### (1-4-1): File Size Processing

In accordance with a recording command issued by the user to record a result of image taking carried out in accordance with an image-taking command also issued by the user, the system control microcomputer 19 records a QT file containing audio data accompanying the result of image taking onto the optical disk 2. In addition, during the operation to record the QT file onto the optical disk 2, the system control microcomputer 19 also catalogs information related to the QT file into an index file stored in a memory by setting a variety of entries for the information in the index file in order to update the index file. The system control microcomputer 19 eventually uses the updated index file stored in the memory to replace an index file recorded on the optical disk 2.

In this processing, the system control microcomputer 19 finds out the size of the QT file and records the size in the file-size field of the basic property data in the index file. By recording the file size in the index file, the optical disk drive 1 simplifies the reproduction operation, hence, enhancing operability. It is to be noted that, by a recording QT file in an external reference format on the optical disk 2 mounted on in the optical disk drive 1, as a result, an audio file, a video file and a resource file, which are shown in Fig. 9, are each recorded onto the optical disk 2 as a QT file. As described before, the resource file is a file used for managing the audio and video files. In addition, the sizes of the files are collectively recorded in a property entry of the resource file to reflect the recording process as shown in Fig. 9.

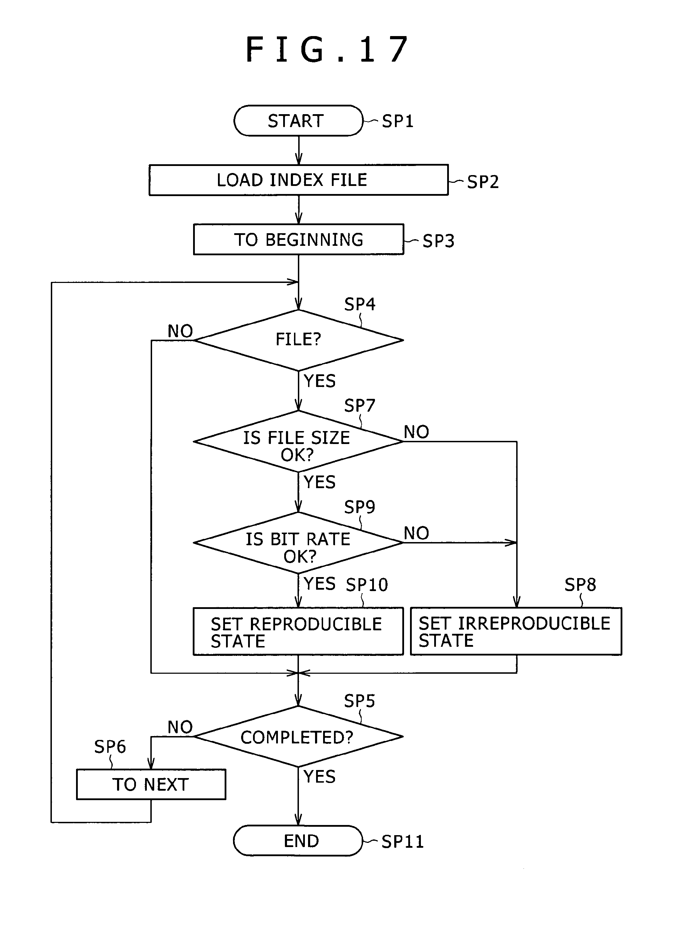

Fig. 17 shows a flowchart representing the procedure of processing carried out by the system control microcomputer 19 when the optical disk 2 is mounted onto the optical disk drive 1 or when the power supply of the optical disk drive 1 is turned on as processing related to a file size. When the optical disk 2 is mounted onto the optical disk drive 1 or when the power supply of the optical disk drive 1 is turned on, the system control microcomputer 19 starts the procedure of the processing at a step SP1. Then, at the next step SP2, the system control microcomputer 19 uses a file management system of the optical disk 2 to transfer the index file from the optical disk 2 into a memory in the so-called loading process. Subsequently, at the next step SP3, the first property entry of the property entry file of the index file is taken as an object of the processing.

Then, at the next step SP4, the system control microcomputer 19 produces a result of determination as to whether or not the property entry taken as an object of processing is an entry with its property entry flag set to provide the property entry associated with a file. If the result of the determination is negative, the flow of the processing procedure goes on to a step SP5 to produce a result of determination as to whether or not the processing has been carried out on all property entries. If the result of the determination is negative, the flow of the processing procedure goes on to a step SP6 at which the next property entry of the property entry file is taken as an object of the processing. Then, the flow of the processing procedure goes back to the step SP4.

If the determination result produced at the step SP4 is affirmative, on the other hand, the flow of the processing procedure executed by the system control microcomputer 19 goes on from the step SP4 to a step SP7. At the step SP7, the system control microcomputer 19 produces a result of determination as to whether or not the file size allows the file to be processed. If the result of the determination is negative, the flow of the processing procedure goes on to a step SP8 at which the file associated with the property entry is set in irreproducible status. Then, the flow of the processing procedure goes on to the step SP5.

If the determination result produced at the step SP7 is affirmative, on the other hand, the flow of the processing procedure goes on to a step SP9 at which the file size is divided by the reproduction duration in order to compute an average bit rate of the file. Then, on the basis of the bit rate, the system control microcomputer 19 produces a result of determination as to whether or not the file can be processed. If the result of the determination is negative, the flow of the processing procedure goes on to the step SP8. It is to be noted that, in this case, the determination processes are carried out on each of the files of the QT file described above. If any of the files are difficult to reproduce, the flow of the processing procedure goes on to the step SP8. If the determination result produced at the sep SP9 is affirmative, on the other hand, the flow of the processing procedure executed by the system control microcomputer 19 goes on to a step SP10 at which the file associated with the property entry is set in reproducible status. Then, the flow of the processing procedure goes on to the step SP5.

By carrying out the above processing, the system control microcomputer 19 produces a result of determination as to whether or not a file can be reproduced for every property entry cataloged in the property entry file on the basis of the file size recorded in the entry and displays a menu showing only reproducible files to the user. The system control microcomputer 19 then waits for the user to carry out an operation making a request for reproduction of a desired file. It is to be noted that, in this case, the menu may also show reproducible files in a specific color and files difficult to reproduce in another color different from the specific color. If the user carries out an operation making a request for reproduction of a file difficult to reproduce, the system control microcomputer 19 may turn down the request. It is to be noted that, in the series of processes, the system control microcomputer 19 may produce a result of determination as to whether or not a file can be reproduced from a format information recorded in the index file as information on the format of the file serving as an object of management. Then, the system control microcomputer 19 reflects the result of the determination in a user interface.

Note that it is possible to provide a configuration in which the system control microcomputer 19 displays a user interface to the user and lets the user edit the user interface in order to change the size of a file. Then, the system control microcomputer 19 changes the file size for a property entry associated with the file.

### (1-4-2): Processing Related to In-group File Management List Extension Data

If a file recorded onto the optical disk 2 is a QT file, for in-group file management list extension data of the file, the system control microcomputer 19 generates a property entry having a format explained earlier by referring to Figs. 7 to 9. In addition, at a reproduction time, a user interface is presented on the basis of the in-group file management list extension data.

That is to say, when the user issues a command to record a result of image taking onto the optical disk 2, the system control microcomputer 19 records video and audio files of the image-taking result onto the optical disk 2. In addition, a property entry, a thumbnail picture entry and a text entry are allocated in an index file stored in a memory as entries associated with the recorded QT file. At that time, the system control microcomputer 19 also carries out these cataloging processes for a resource file serving as a representative of a plurality of files serving as the QT file by extending a property entry associated with the resource file and cataloging binary file identifiers of other video and audio files. Then, the system control microcomputer 19 transfers the index file including newly cataloged pieces of information from the memory to the optical disk 2. In this way, the system control microcomputer 19 collectively catalogs management information in the property entry associated with the file serving as a representative of closely interrelated files to be reproduced at the same time. Thus, the operability is enhanced by the collective recording of management information in the property entry.

By recording management information in the extended property entry in this way, at a reproduction time, the system control microcomputer 19 is capable of presenting a user interface to a user by displaying one icon representing one QT file. Then, the system control microcomputer 19 accepts a request made by operating the icon as a request for reproduction of a selected object to be reproduced. It is to be noted that, for an index file in which management information is not collectively recorded in one property entry in accordance with this embodiment, the system control microcomputer 19 displays a menu to the user for each plurality of files composing a QT file and accepts a request made in an operation carried out by the user. It is to be noted that, for an index file conforming to the conventional configuration, a source file is found by recording a file management system and a menu of other video and audio files is not displayed by recording this resource file. By doing so, it is possible to present a unified user interface for a QT file with its management information collectively recorded as information of a representative file and a QT file recorded in accordance with the conventional configuration. Thus, improved operability for the user can be obtained.

### (1-4-3): Processing Related to Disk Titles

In this embodiment, an optical disk 2 may be presented to the user as a disk on which a file index has been recorded in advance. In this case, in a process to manufacture the optical disk 2, the index file is recorded onto the optical disk 2 in advance as a video file used for displaying information such as the name of the manufacturer producing the optical disk 2 and the commodity name of the optical disk 2 as a moving picture. The index file is recorded on the optical disk 2 with the binary file identifier identifying the video file. In this case, the binary file identifier shown in Fig. 6 is the binary file identifier included in the basic property data of the first property entry. For this basic property data, the extension data explained earlier by referring to Fig. 10 is provided. It is to be noted that, in the case of this extension data, an identification code used for identifying the manufacturer producing the optical disk 2 is set as the owner ID. On the other hand, an identification code used for identifying an application for reproducing the video file is set as the application code.

Then, a result of image taking is recorded onto the optical disk 2 presented to the user as a disk on which a file index has been recorded in advance. In this case, when the user issues a command to edit the title of the optical disk 2, the system control microcomputer 19 updates the index file by setting the binary file identifier included in the basic property data at a value identifying a file specified by the user. In addition, in the extension data shown in Fig. 10, the owner ID is set at 0 and the application ID is set at an identification code used for identifying an application of the optical disk drive 1. It is to be noted that the video file can be a video file recorded on the optical disk 2 by an external apparatus such as a computer, a video file recorded on the optical disk 2 by the optical disk drive 1 or another video file.

Thus, in the optical disk drive 1, the video file is applied to the title of the optical disk 2 and, for example, can be used in typically the opening of the optical disk 2. Such a video file allows the operability based on the index file to be enhanced.

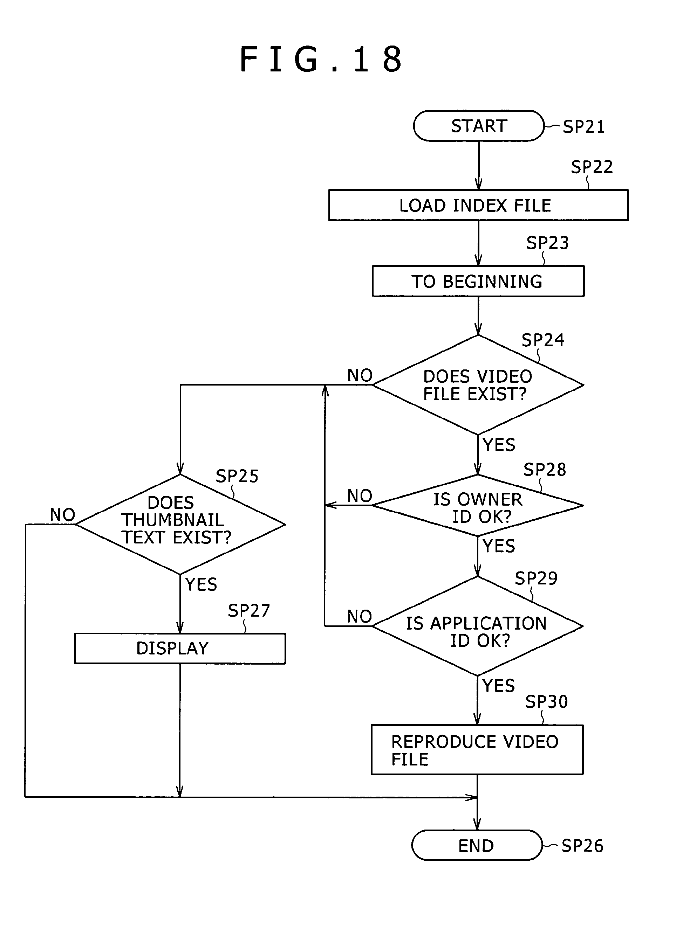

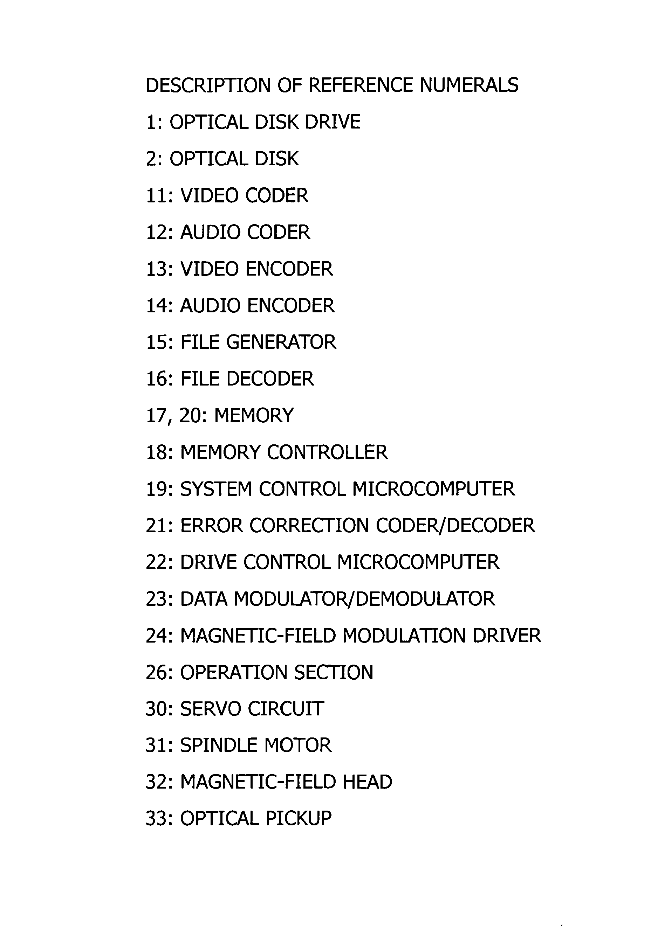

Fig. 18 shows a flowchart representing the procedure of processing carried out by the system control microcomputer 19 when the optical disk 2 is mounted onto the optical disk drive 1 or when the power supply of the optical disk drive 1 is turned on as processing related to the title of the optical disk 2. When the optical disk 2 is mounted onto the optical disk drive 1 or when the power supply of the optical disk drive 1 is turned on, the system control microcomputer 19 starts the procedure of the processing at a step SP21. Then, at the next step SP22, the system control microcomputer 19 uses a file management system of the optical disk 2 to transfer the index file from the optical disk 2 into a memory in the so-called loading process. Subsequently, at the next step SP23, the first property entry of the property entry file of the index file is taken as an object of the processing. The steps carried out at the steps SP21 to SP23 are identical with respectively the steps S1 to S3 of the flowchart explained earlier by referring to Fig. 17.

By carrying out the processes described above, the system control microcomputer 19 takes the property entry associated with the root directory as an object to be processed. Then, the flow of the processing procedure goes on to a step SP24 to produce a result of determination as to whether or not the binary file identifier included in the basic property data has been set at a value identifying a video file.

If the result of the determination is negative, the flow of the processing procedure goes on to a step SP25 to produce a result of determination as to whether or not the thumbnail picture entry index and the title picture entry index, which are included in the property entry header of the property entry, indicate that a thumbnail picture and a text respectively have been recorded. If the result of the determination is negative, the flow of the processing procedure goes on from the step SP25 to a step SP26, at which the execution of the processing procedure is ended. Thus, in this case, the system control microcomputer 19 terminates the execution of the processing procedure without carrying out any operations such as an operation to display the title of the optical disk 2. If the determination result produced at the step SP25 is affirmative, on the other hand, the flow of the processing procedure goes on to a step SP27. At the step SP27, data of the moving picture entry pointed to by the thumbnail picture entry index and data of the text entry pointed to by the title picture entry index are loaded. After the loaded pieces of data are displayed, the flow of the processing procedure goes on to the step SP26, at which the execution of the processing procedure is ended. Thus, in this case, the system control microcomputer 19 displays the title of the optical disk 2 by showing a thumbnail picture and a text.

If the determination result produced at the step SP24 is affirmative, on the other hand, the flow of the processing procedure goes on to a step SP28. At the step SP28, the system control microcomputer 19 produces a result of determination as to whether or not the owner ID set in the extension data of the property entry indicates that the video file can be reproduced in the optical disk drive 1. In this embodiment, only an owner ID set at the identification code of a manufacturer making the optical disk drive 1 or an owner ID set at 0 indicates that the file can be reproduced in the optical disk drive 1. Other owner IDs indicate that the video file cannot be reproduced in the optical disk drive 1. If the result of the determination indicates that the file cannot be reproduced in the optical disk drive 1, the flow of the processing procedure goes on from the step SP28 to the step SP25. Thus, the system control microcomputer 19 does not display data contained in the video file related to the title of a disk made by another manufacturer.

If the owner ID is set at the identification code of a manufacturer making the optical disk drive 1 or set at 0 to give a confirmative determination result at the step SP28, on the other hand, the flow of the processing procedure executed by the system control microcomputer 19 goes on from the step SP28 to a step SP29. At the step SP29, the system control microcomputer 19 examines the application ID in order to produce a result of determination as to whether or not the video file identified by the binary file identifier can be reproduced in the optical disk drive 1. If the result of the determination is negative, the flow of the processing procedure executed by the system control microcomputer 19 goes on from the step SP29 to a step SP25. If the result of the determination is affirmative, on the other hand, the flow of the processing procedure executed by the system control microcomputer 19 goes on from the step SP29 to a step SP30.

At the step S30, the system control microcomputer 19 issues a command to reproduce the video file identified by the binary file identifier. After the video file is reproduced, the flow of the processing procedure goes on to the step SP30, at which the execution of the processing procedure is ended.

In the processing described above, the system control microcomputer 19 displays a video file cataloged in a property entry corresponding to the root directory of the optical disk 2 when the optical disk 2 is mounted onto the optical disk drive 1 or when the power supply of the optical disk drive 1 is turned on. By displaying the video file, for example, the system control microcomputer 19 presents various kinds of information on the optical disk 2 and shows an opening video display for a variety of files recorded on the optical disk 2.

### (1-4-4): Processing Related to Shadow File Entries

The opening video display output by the system control microcomputer 19 as described above is icons serving as thumbnail pictures of files cataloged in the index file in accordance with setting made by the user. When the user carries out an operation to issue a command to catalog a thumbnail picture, which has an icon displayed as described above, for another purpose, the thumbnail picture is cataloged in accordance with the operation carried out by the user.

In this processing, the system control microcomputer 19 accepts a thumbnail picture selected by a command entered by the user as a thumbnail picture to be cataloged, and catalogs the thumbnail picture in a thumbnail picture entry. In addition, the system control microcomputer 19 also catalogs a property entry pointing to this thumbnail picture entry. For more information, refer to Figs. 3 to 6. In this case, the property entry type of the property entry is set at 1 to indicate that the property entry is a shadow file property entry, that is, to set the property entry as a shadow file property entry. In addition, the parent entry field of the property entry is set at the entry number of the original property entry. Thus, in this embodiment, if necessary, an icon can be displayed by using a thumbnail picture cataloged in a shadow property entry. This feature contributes to the improvement of the operability based on the index file. It is to be noted that the system control microcomputer 19 also accepts a request made by the user as a request for cataloging of a shadow file property entry for a text entry in the same way as a thumbnail picture entry.

In addition, if the user issues a command making a request for information such as a menu based on a recording operation carried out for another purpose with a thumbnail picture or a text already cataloged for the other purpose by using a shadow file property entry as described above, the system control microcomputer 19 displays the thumbnail picture or text cataloged by using the shadow file property entry for the already cataloged file associated with the shadow file property entry.

### (1-4-5): Processing Related to Relevant Files

When the user issues a command making a request for a post-recording operation in a process to record a result of image taking onto the optical disk 2, the system control microcomputer 19 issues a command to the file management system of the optical disk 2 to record a video data file A shown in Fig. 12 (A) as a file representing the result of image taking and a dummy data file B shown in Fig. 12 (C) as a file to be used for allocating a recording area to a post-recording audio file at a post-recording time onto the optical disk 2 in predetermined data units by alternating the data units of the video data file A with the data units of the dummy data file B as shown in Fig. 12 (B). In this case, however, in order to allow video data to be obtained as video data without interruptions in a process carried out by the system control microcomputer 19 to reproduce the video data file A from the optical disk 2, the file management system actually records the video data file A on the optical disk 2 by generating free areas in the video data file A as shown in Fig. 12 (A).

When a command making a request for a post-recording operation to record a post-recording audio file C for the recorded video file A representing the image-taking result as described above, the system control microcomputer 19 outputs the post-recording audio file C and a dummy data file D alternately to the optical disk 2 in order to record the audio file C in the free areas generated in the video file A as areas originally allocated to the dummy data file B. In this way, in the optical disk drive 1, the audio file C and the video file A are recorded onto the optical disk 2 by interleaving the audio file C with the video file A so that, in an operation to reproduce the audio file C and the video file A at the same time, the audio file C and the video file A can each be reproduced without interruptions.

Accompanying the operations to record the files A to D onto the optical disk 2, the system control microcomputer 19 catalogs the files A to D in the index file. The files C and D are recorded in free areas allocated in advance to the dummy data file B. A property entry associated with the audio file C containing actual data is extended as extension data with its structure shown in Fig. 11. The entry number in the structure of the extension data is set at a value indicating an entry associated with the dummy data file D.

When a command is received as a command to delete the audio file C already recorded as described above from the optical disk 2, the system control microcomputer 19 deletes the audio file C from the optical disk 2 and de-catalogs a property entry associated with the audio file C from the index file. When the system control microcomputer 19 de-catalogs the property entry associated with the audio file C from the index file, the system control microcomputer 19 refers to the entry number included in the property entry associated with the audio file C as an entry number pointing to the dummy data file D in order to find out a property entry associated with the dummy data file D. The system control microcomputer 19 then returns the area occupied so far by the deleted audio file C to the dummy data file D associated with the found property entry. After the audio file C is deleted from the optical disk 2 mounted on the optical disk drive 1, the information-recording surface of the optical disk 2 is restored to a state shown in Fig. 12 (B). In order to reflect the restoration of the area of the dummy data file D and the information-recording surface of the optical disk 2, the property entry associated with the dummy data file D is updated.

When the user enters a command to update the audio file C, on the other hand, the audio file C is updated by writing data over data already existing in the audio file C and, accompanying the operation to update the audio file C, the property entry associated with the audio file C is also updated. In addition, the system control microcomputer 19 refers to the entry number included in the property entry associated with the audio file C as an entry number pointing to the dummy data file D in order to find out a property entry associated with the dummy data file D. Then, the property entry associated with the dummy data file D is also updated in accordance with the operation to update the property entry associated with the audio file C.

Thus, even if the optical disk drive 1 needs to carry out a post-recording operation repeatedly, an audio file C used in the post-recording operation can be recorded in an area allocated in advance to the dummy data file B by executing simple management of property entries. Thus, even if a post-recording operation is carried out repeatedly, the audio file C and the video file A can each be reproduced without interruptions in an operation to reproduce the audio file C and the video file A at the same time.

### (1-4-6): Processing Related to Private Index Files

When an application program peculiar to the optical disk drive 1 is activated during processing related to the index file used for cataloging extracted information of every file as described above or processing related to a file, and the application program then issues a command to separately catalog information such as extracted information used for providing convenience of processing of the application program, the system control microcomputer 19 generates a private index file used for cataloging the extracted information as explained earlier by referring to Figs. 13 to 16 and records the generated private index file onto the optical disk 2. Thus, instead of adding more information to the index file used as an index file common to applications, a private index file peculiar to an application is recorded onto the optical disk 2 in the optical disk drive 1 and, by utilizing the private index file, the operability can be enhanced.

In a process to record a private index file onto the optical disk 2, the system control microcomputer 19 records a list of private index files in a property entry in the index file. Every private index file cataloged on the list is represented by an owner information of the private index file and the file name of the private index file.

The system control microcomputer 19 generates a private index file containing pieces of private index data for each application and the pieces of private index data contained in every private index file each correspond to a property entry of the index file. Every piece of private index data in the private index file has a fixed uniform length. The pieces of private index data are formed in series so as to be each associated with the private index file. Let us assume that an offset H is the position of the beginning of the first piece of private index data in the private index file. Let notation E denote the entry number of a property entry corresponding to a specific piece of private index data. Also let notation X denote the fixed uniform length, which is the size of every piece of private index file. In this case, the optical disk drive 1 is capable of finding the position of the beginning of the specific piece of private index data by computing the value of the following expression: X * (E - 1) + H.

Due to the fact that an optical disk 2 including a private index file cataloged in another apparatus may be mounted on this optical disk drive 1 in some cases, when the optical disk 2 is mounted on the optical disk drive 1 or when the power supply is turned on, the system control microcomputer 19 finds the private index file on the basis of the owner information and the name of the private index file and provides the user with a user interface using the private index file in accordance with a command issued by an application carried out by the user.

In addition, when the user enters a command to delete a file through the user interface provided as described above, the validity flag included in a private data status flag group recorded in a private entry corresponding to the index file as a validity/invalidity status flag is set at a value representing invalid status to indicate that the deleted file is no longer valid in the private index file used for cataloging private index data for the deleted file.

On top of that, even with a user interface provided through a private user interface, the system control microcomputer 19 does not provide a user interface for private index data with the validity/invalidity status flag set at a value representing the invalid status as described above. Thus, the embodiment provides a private index file in such a way that the status of a file cataloged in the private index file does not contradict the actual status of the file. It is to be noted that, when a file is merely deleted, in actuality, a property entry cataloged in the index file as a property entry associated with the deleted file can be set at a value representing invalid status. Thus, without relying on the value of the validity/invalidity status flag, a correct state can be known by referring to the index file. However, the property entry associated with the deleted file becomes a free area due to the deletion of the file. Thus, if the file is reused by another application, a problem caused by contradictory cataloging of the property entry as a free area is not resolved. In order to solve this problem caused by contradictory cataloging of the property entry as a free area, the validity/invalidity status flag is set at a value representing the invalid status to accompany the deletion of the file instead of invalidating the property entry as described above. As described above, the system control microcomputer 19 sets the validity/invalidity status flag in the processing of a property entry associated with a deleted file. Thus, as long as the private index file exists, only the validity/invalidity status flag of the extended data associated with the private index file is manipulated.

It is to be noted that the operation to switch the validity/invalidity status flag associated with a private index file to accompany a change of the status a file serving as an object of management is of course necessary even if the optical disk drive 1 does not have a peculiar application associated with the private index file. Thus, when a file is deleted, for example, the system control microcomputer 19 switches the validity/invalidity status flag associated with the property file for the deleted file to a value representing the invalid status.

It is to be noted that, instead of setting each piece of private index data at such a fixed uniform length, a list can be provided in the private index file as a list showing relations between property entries and pieces of private index data. It is also worth noting that, typically, the list is conceivably generated to show a relation between the entry number of every property entry and the offset and size of the corresponding piece of private index data. With such a list, an application is capable of finding the offset and size of the piece of private index data corresponding to a given entry number. In addition, in this case, in place of an entry number, a binary file identifier pointing to a file associated with a property entry identified by the entry number can be used.

It is to be noted that a private index file can also be generated in the same format as an index file. It is also worth noting that, in this case, each property entry in the true index file needs to be associated with a property entry in an index file used as a private index file. Typically, it is necessary to use information recorded in identifiers and/or headers as information for distinguishing the true index file from an index file used as a private index file.

With private index files cataloged as described above, when the user activates an application peculiar to the optical disk drive 1, the system control microcomputer 19 finds out a property entry associated with a file serving as an object of processing based on the application from the index file, and finds out a cataloged private index file from pieces of extended data of property entries. From the found private index files, the system control microcomputer 19 further determines the owner ID and file name of the private index file associated with the application. If the private index file associated with the application can be found out in this way, the file management system of the optical disk 2 loads the private index file into a memory and presents a user interface based on pieces of private index data, which each correspond to a property entry. It is to be noted that, in this case, in place of private index data corresponding to an uncataloged property entry, extracted information recorded in the property entry is used.

### (2): Operations of the Embodiment

In the optical disk drive 1 with the configuration shown in Fig. 1, video data and audio data acquired by image-taking means and audio acquisition means are encoded by the video coder 11 and the audio coder 12 respectively. The pieces of encoded data are converted by the file generator 15 into a data stream of a QT movie file, which is then recorded onto the optical disk 2 by way of a recording system comprising the memory controller 18, the error correction coder/decoder 21, the data modulator/demodulator 23, the magnetic-field modulation driver 24 and the optical pickup 33. In this way, in the optical disk drive 1, a result of image taking is recorded onto the optical disk 2 as a QT movie file. In addition, following the operation to record the QT movie file onto the optical disk 2, data generated by the system control microcomputer 19 is output to the recording system to be also recorded onto the optical disk 2 to update management information related to the file management system of the optical disk 2. The management information is updated to reflect a result of the operation to record the QT movie file onto the optical disk 2.

A QT movie file recorded on the optical disk 2 as described above is reproduced on the basis of the management information of the file management system and output to the file decoder 16 sequentially by way of the optical pickup 33, the data modulator/demodulator 23, the error correction coder/decoder 21 and the memory controller 18. The file decoder 16 demodulates the reproduced QT movie file. Then, the video decoder 13 and the audio decoder 14 decode results of the demodulation to output video and audio signals respectively.

When a QT movie file is recorded onto the optical disk 2 in the optical disk drive 1, the system control microcomputer 19 acquires data for a thumbnail picture from the file generator 15 and acquires data of a title from information such as inputs entered by the user before and after the file recording operation. In addition, the system control microcomputer 19 also acquires information such as a file name related to the file management system as a part of a collected extracted information of the QT movie file recorded on the optical disk 2. Much like management information of the file management system for the optical disk 2, in the optical disk drive 1, the system control microcomputer 19 generates an index file from the acquired extracted information and stores the index file in a memory embedded in the system control microcomputer 19. The index file is eventually recorded on the optical disk 2 also in the format of a QT file. Then, the management information of the file management system is updated to reflect a result of the operation to record the index file on the optical disk 2.

In the processing carried out by the system control microcomputer 19 to generate an index file, extracted information are classified by attribute and, for the attributes, a thumbnail picture entry file and a text entry file are generated to conform to recording of a QT movie file as shown in Fig. 3. On the other hand, information showing attributes of each entry, information showing relations with entries and other information are stored in a property entry file. When a file recorded on the optical disk 2 is processed, the information showing relations between entries and other information are renewed to update the index file stored in the embedded memory and the updated index file is eventually recorded on the optical disk 2.

Thus, the index file simplifies processing of a variety of files recorded on the optical disk 2 mounted on the optical disk drive 1.

In this series of processes carried out by the optical disk drive 1, each QT file is recorded on the optical disk 2 in an external reference format. The sizes of video, audio and resource files forming the QT file are found and the total size is recorded in the file-size field included in the basic property data as shown in Fig. 9. The basic property data including the file size is cataloged as a property entry in the index file. By cataloging a file size as a property entry in the index file in this way, a reproduction operation carried out by the optical disk drive 1 can be made simple. In addition, operability can be improved.

That is to say, a reproduction apparatus uses a file size and required bit rate of a file to be reproduced as determination factors used to determine whether or not the file can be reproduced. In particular, the recording medium having this recording type to serve as the optical disk 2 is used also in a computer. It is thus expected that an apparatus other than the optical disk drive 1 records files to be processed at a variety of bit rates onto the optical disk 2, which is then mounted on the optical disk drive 1. Thus, a variety of files is recorded onto the optical disk 2 by an apparatus and reproduced from the optical disk 2 by another apparatus. In the case of a standstill picture file, for example, due to the configuration of a reproduction apparatus, the reproduction apparatus may not be capable of decoding the file having large data size, in some cases. In addition, the reproduction apparatus may not be capable of keeping up with data processing carried out at a high bit rate.

However, the file size useable as one of factors used for determining whether or not a file can be reproduced is not recorded in the conventional index file. Thus, the file size can be found out only from the file management system related to operations to record a file on the optical disk 2 as a file to be reproduced later from the optical disk 2.

In the case of this embodiment, on the other hand, a field for the file size is provided in the index file. Thus, if the size of a file serving as an object of management is cataloged in the field, by referring to the record cataloged in the index file, the reproduction apparatus is capable of determining whether or not the file can be reproduced. Therefore, the reproduction apparatus does not need to find out the size of the file by using the file management system due to the availability of the file size in the index file. As a result, it is possible to reduce time it takes to process the file and a load borne at the reproduction time and, hence, enhance the operability due to the shortened processing time and the decreased load borne at a reproduction time.

Thus, as is obvious from the flowchart shown in Fig. 18, in this embodiment, an index file is loaded and the file size of a file is found out from the loaded index file. Then, the file size is examined to determine whether or not it is difficult to reproduce the file. It is therefore unnecessary to meddle in acquisition of the file size from the file management system. As a result, it is possible to reduce time it takes to process the file and, hence, enhance the operability of the index file.

In addition, in this embodiment, the above determination process is carried out in advance when the optical disk 2 is mounted onto the optical disk drive 1 or when the power supply of the optical disk drive 1 is turned on, and a user interface based on a result of the determination process is presented to the user to show a list of reproducible files and allow the user to carry out an operation to select one of the reproducible files. It is thus possible to prevent the user from carrying out a wasteful operation such as an operation to make a request for reproduction of a file difficult to reproduce. As a result, it is possible to enhance the operability of the index file.

On top of that, a QT file used for recording a result of image taking is recorded in the external reference format to represent a plurality of files including video, audio and resource files of the result, and management information of the files is collectively recorded in a property entry associated with the resource file serving as a representative of the files (refer to Fig. 3). In addition, at a reproduction time, a menu only for the resource file with the property entry thereof used for collectively cataloging the management information is displayed to the user in order to allow the user to carry out an operation to select an item from the menu.

In the case of the conventional index file, however, one file is cataloged as one property entry. Thus, in the case of a plurality of files to be processed at the same time at a reproduction time, much like a QT file having an external reference format, it is necessary to provide a property entry for each of the files even if the user naturally recognizes the files as a single content. Accordingly, in the case of the conventional index file, the number of properties increases in proportion to the number of contents. In consequence, the size of a memory for temporarily storing the index file and the amount of processing carried out by a processing system of the index file also rise as well due to the increasing number of properties. As a result, operability deterioration caused by the larger number of properties, the larger size of the memory and the larger amount of the processing becomes a problem.

In the case of this embodiment, on the other hand, by collectively recording extracted information in a property entry associated with a representative file as described earlier, the number of entries can be prevented from rising due to the collective recording of the extracted information in a property entry. Thus, the size of the memory can also be prevented from increasing. In addition, the amount of the processing carried out by the processing system of the index file can also be prevented from increasing. As a result, the operability can be enhanced due to the smaller number of properties, the smaller size of the memory and the smaller amount of the processing.

On top of that, since the property entry used for cataloging information is a property entry of a file representing a plurality of files composing a QT file, other video and audio files can be accessed with ease and with a high degree of reliability. Thus, processing carried out at a reproduction time and other processing can be made even simpler.

Furthermore, by assigning one icon to a plurality of files, the operability given to the user can be improved. Thus, the user can utilize the optical disk drive 1 with a higher degree of freedom. That is to say, in the case of the conventional index file, every file is displayed as an icon. In addition, it is necessary to select an icon of a resource file from the displayed icons and operate the selected icon. In the case of this embodiment, on the other hand, an operation to select such an icon can be eliminated. The elimination of this operation allows the user to utilize the optical disk drive 1 with a higher degree of freedom. It is to be noted that, in a process to record a QT file having a long reproduction duration onto the optical disk 2, the video and audio files may each be split into a plurality of files. In this case, a QT file comprises a resource file, a plurality of video files and a plurality of audio files. Thus, the effect of collectively cataloging a plurality of files as a property entry as is the case with this embodiment is even greater in this case.

As described before, in an operation to display an icon for a file recorded on the optical disk 2 as described above, the optical disk drive 1 displays a disk title initially as is obvious from the flowchart shown in Fig. 18 if information on the disk title has been recorded on the optical disk 2.

That is to say, the optical disk 2 to be mounted on the optical disk drive 1 may be provided to the user as an optical disk 2 including an index file from the beginning in some cases. In the case of such an optical disk 2, the binary file identifier of the basic property data in a property entry included in the index file as an entry associated with the root directory points to a video file recorded on the optical disk 2. Fig. 6 is a diagram showing the structure of the basic property data including the binary file identifier. In addition, the extension data of this property includes an owner ID and an application ID. The owner ID is an ID used for identifying an owner involved in an operation to record the binary file identifier, which serves as information pointing to a video file as described above. On the other hand, the application ID is an ID used for identifying an application, which accompanies an operation to reproduce a video file.

Then, when the user issues a command to record a video file on the optical disk 2 and catalog the video file in the title of the optical disk 2, the binary file identifier of the basic property data in a property entry included in the index file as an entry associated with the root directory is set at a value pointing to the video file. In addition, the owner ID in the extension data of this property is set at 0 indicating that the cataloging of the video file has been requested by the user. On the other hand, the application ID is set at a code identifying an application related to the optical disk drive 1.

Thus, it is possible to assign not only a thumbnail picture and a text, but also a video file to the title of the optical disk 2 in this embodiment. As a result, the operability can be enhanced to a level higher than that of the conventional system. In addition, by cataloging an audio file in the title of the optical disk 2 in place of a video file, audio guidance can be generated from the audio file. In this case, the operability of the index file can be improved.

Moreover, the user and application, which have been involved in an operation to catalog the title of the optical disk 2, can be identified from the owner ID and the application ID respectively. Thus, after identifying the user and application, which have been involved in an operation to catalog the title of the optical disk 2, the reproduction apparatus is capable of determining whether or not the title of the optical disk 2 is to be reproduced. As a result, the level of operability enjoyed by the user can be raised.

Assuming that a user interface is provided as an icon or other information in this optical disk drive 1, when the optical disk 2 is mounted onto the optical disk drive 1, a file pointed to by the binary file identifier of the basic property data in a property entry associated with the root directory is reproduced and then an operation menu can be displayed. Thus, information such as cautions to be exercised in using the optical disk 2 and a title background of the manufacturer of the optical disk 2 can be displayed initially in order to present various kinds of information on the optical disk 2 to the user. In addition, the user may set a video file in the title of the optical disk 2. In this case, a file specified by the user is used as the video file. Thus, if the optical disk 2 is used for storing records of a travel, for example, the title of the travel can be displayed as a moving picture and the title of the optical disk 2 can be generated from the video file. As a result, the operability of the index file can be improved.

With such processing, in the optical disk drive 1, the owner ID and the application ID cancel reproduction of a video file. Thus, for example, the optical disk drive 1 does not reproduce a disk title provided on an optical disk 2 made by another company or a disk title related to an application difficult to handle by using the optical disk 2. As a result, the user can utilize the optical disk drive 1 with a higher degree of freedom. In addition, if such an owner ID is set to cancel an operation to display a video file related to the title of the optical disk 2, the cancellation of the operation to display a video file related to the title of the optical disk 2 can be applied only to owner IDs other than 0, which indicates that the operation to catalog the video file has been requested by the user.

If information such as opening video data is presented to the user as described above, the optical disk drive 1 displays icons each showing a thumbnail picture cataloged in the index file in accordance with user setting. The user may then select a file by specifying one of the displayed icons and issue a command to separately catalog the thumbnail picture and/or text associated with the selected file. In this case, the thumbnail picture and/or text specified in the command are cataloged in a thumbnail picture entry and/or a text entry respectively. In addition, a property entry associated with the thumbnail picture entry and/or the text entry is added to the property entry file. The property entry type of the added property entry is set at 1 indicating that the property entry is a shadow file property entry as shown in the data structure of Fig. 5 . On the other hand, the parent entry number of the added property entry serving as a shadow file property entry is set at the entry number of the original property entry corresponding to the added property entry.

Thus, the optical disk drive 1 allows the thumbnail picture and/or text associated with a file to be cataloged separately to reflect a hobby and/or favorite of the user without having any effects on the structure of original index file. The separate cataloging of a thumbnail picture and/or a text raises the operability of the index file and, hence, the level of freedom given to the user as freedom to use the optical disk drive 1.

That is to say, in normal processing carried out in the optical disk drive 1, the user is provided with information such as a user interface based on typically a thumbnail picture and/or text originally cataloged in the index file. In the case of this embodiment, however, the user may issue a command to request the optical disk drive 1 to present information such as a user interface based on typically a thumbnail picture and/or text cataloged as a shadow thumbnail picture and/or text respectively. Thus, the optical disk drive 1 raises the level of freedom given to the user as freedom to use the optical disk drive 1.

On the other hand, when the user issues a command making a request for an operation to record an image-taking result with a planned post-recording operation, a video file A shown in (A) of Fig. 12 containing the result of image taking and a dummy data file B shown in (C) of Fig. 12 are recorded into a contiguous area on the optical disk 2 in predetermined data units by alternating the data units of the video data file A with the data units of the dummy data file B as shown in (B) of Fig. 12. In this case, however, in order to allow video data to be obtained as video data without interruptions in a process to reproduce the video data file A, the video data file A is recorded on the optical disk 2 by generating free areas in the video data file A as shown in (A) of Fig. 12.

In this state, when the user issues a command making a request for a post-recording operation of the video file A with the image-taking result recorded as described above, the system control microcomputer 19 outputs a post-recording audio file C and a dummy data file D alternately to the optical disk 2 in order to record the audio file C in the free areas generated in the video file A as areas originally allocated to the dummy data file B. Thus, in an operation to reproduce the audio file C and the video file A at the same time, the audio file C and the video file A can each be reproduced without interruptions.

If the post-recording process described above is repeated in the optical disk drive 1 to record another audio file, the other audio file is recorded also in the free areas generated in the video file A as areas originally allocated to the dummy data file B. This is because, if the other audio file is recorded in areas other than the free areas, it will be difficult to reproduce the other audio file and the video file A without interruptions in an operation to reproduce the other audio file and the video file A at the same time. In order to solve this problem, the optical disk drive 1 needs to update the areas allocated to the dummy data file D in a process accompanying operations to delete and update the audio file C. Thus, in this case, there is another dummy data file that needs to be updated to accompany operations to record, delete and update an audio file serving as an object of management.

In order to implement the above feature in the optical disk drive 1, in the property entry shown in Fig. 11 as a property entry associated with the audio file serving as an object of management, the entry number is set at the value of the number of a property entry associated with the recorded other dummy data file, which serves as a file related to the audio file. Thus, in the optical disk drive 1, it is possible to simplify the management of another dummy data file that needs to be updated in a process accompanying operations to record, delete and update an audio file serving as an object of management, and the simplified management enhances the operability related to the index file.

To put it concretely, in the optical disk drive 1, in a process accompanying operations to delete and update the audio file C associated with a recorded specific property entry, another property entry indicated by the entry number in the specific property entry as another entry associated with the dummy data file D and, in addition, recording areas managed by the file management system as areas allocated to the dummy data file D are also updated as well. If the audio file C is deleted, for example, recording areas allocated so far to the audio file C can be returned to the dummy data file D. When recording areas allocated so far to the audio file C is returned to the dummy data file D, from a property entry associated with the audio file C invalidated by the deletion, a property entry associated with the dummy data file D can be found out and updated so as to allow another audio file to be newly recorded. In addition, in the processing of a property entry involved in the operation to delete the audio file C, the system control microcomputer 19 merely sets the validity/invalidity status flag shown in Fig. 4 at a value representing invalid status without renewing other fields. Thus, the optical disk drive 1 is capable of effectively utilizing pieces of information kept in the other fields as they are as information useful for an operation to re-record the audio file B.

By the way, when the user activates an application related to processing of an index file peculiar to the optical disk drive 1 as an application unique to the optical disk drive 1, the optical disk drive 1 generates a private index file to serve as the index file peculiar to the optical disk drive 1 and stores the private index file onto the optical disk 2 as explained earlier by referring to Figs. 13 to 16. In addition, a user interface based on the private index file is presented to the user.

Thus, the optical disk drive 1 is capable of carrying out processing such as a process to accept an operation carried out by the user as an operation for a user interface adapted to an application program without having any effects on the structure of the index file intended as an index file common to a variety of application programs. The capability of carrying out such processing contributes to the enhancement of the operability.

In the optical disk drive 1, a private index file generated as described above is a series of consecutive pieces of private index data, and the pieces of private index data each correspond to a property entry of the index file. Each property entry included in the index file as an entry corresponding to a piece of private index data of every private index file includes the owner information and file name of the private index file. In this way, each property entry in the index file is associated with different pieces of private index data pertaining to different recorded private index files, which can be differentiated from each other by information set in the property entry as information indicating a relation between the property entry and each of the pieces of private index data in the private index files.

When the user carries out an operation to activate an application in the optical disk drive 1 as an application associated with a private index file, from records stored in the property entry associated with a file to be processed, private index files already recorded on the optical disk 2 are found out. The owner information and file name of each of the private index files are examined to determine whether or not the private index file associated with the application has already been recorded on the optical disk 2. If the private index file associated with the application has already been recorded on the optical disk 2, a user interface is presented on the basis of private index data included in the private index file as private index data corresponding to property entries of the common index file instead of presenting a user interface based on extracted information recorded in the property entries. Thus, the optical disk drive 1 is capable of raising the level of freedom given to the user as freedom to use the optical disk drive 1 by presenting a user interface based on extracted information suitable for an application peculiar to the optical disk drive 1. In addition, a private index file can be used not only for presenting such a user interface, but also for recording information such as extracted information required in various kinds of processing. Thus, the operability can be further enhanced.

Each property entry in the index file includes validity flags each associated with a recorded private index file and used for indicating whether private index data included in the private index file as private index data corresponding to the property entry is valid or invalid in the optical disk drive 1. If a file serving as an object of management is deleted by an application, a validity flag included in a property entry associated with the deleted file as a flag associated with a recorded private index file for the application is set at a value representing invalid status. If the deleted file is re-cataloged as the property entry by another application and private index data corresponding to the property entry is cataloged in a specific private index file associated with the other application, on the other hand, a validity flag included in the property entry associated with the re-cataloged file as a flag associated with the specific private index file associated with the other application is set at a value representing valid status.

Thus, in the optical disk drive 1, private index files are recorded in such a way that each of the recorded private index file does not contradict the status of actual files. As a result, it is possible to prevent the operability from deteriorating due to such contradiction.

### (3): Effects of the Embodiment

In accordance with the embodiment described above, by setting the size of any specific file in an entry in an index file comprising a series of such entries each also used for storing extracted information of every file including the specific file, the optical disk drive 1 is capable of determining whether or not it is difficult to reproduce the specific file. Thus, the degree of freedom given to the user as freedom to use the optical disk drive 1 can be raised.

That is to say, by determining whether or not it is difficult to reproduce a file on the basis of the size of the file, the file can be determined to be a reproducible or irreproducible file with ease. The ease of the determination as to whether or not it is difficult to reproduce a file shortens the time it takes to carry out processing, hence, raising the degree of freedom given to the user as freedom to use the optical disk drive 1.

In addition, the optical disk drive 1 is capable of presenting a user interface based on the result of each determination as to whether or not it is difficult to reproduce a file. The optical disk drive 1 then accepts a selection from the user as a selection of a reproducible file. In this way, it is thus possible to prevent the user from carrying out a wasteful operation. As a result, it is possible to raise the degree of freedom given to the user as freedom to use the optical disk drive 1.

On top of that, in accordance with the configuration described above, by collectively cataloging management information of a plurality of closely interrelated files that need to be processed at the same time, the time it takes to collectively manage and process the files can be shortened and the shortened management and processing time raises the degree of freedom given to the user as freedom to use the optical disk drive 1.

In addition, by collectively cataloging the management information in an entry associated with a file serving as a representative of a plurality of closely interrelated files, another related file can be found out from the entry in a short period of time and this short period of time results in reduced time it takes to carry out processing such as a reproduction operation, hence, raising the degree of freedom given to the user as freedom to use the optical disk drive 1.

Furthermore, with management information recorded collectively in one entry associated with a file serving as a representative of a plurality of files, the files can be reproduced through a user interface corresponding to the entry. Thus, the user is capable of selecting an item from a menu with ease. As a result, it is possible to raise the degree of freedom given to the user as freedom to use the optical disk drive 1.

Moreover, in accordance with the configuration described above, an entry containing the title of the optical disk 2 can be set to point to extracted information based on video data. Thus, a moving picture file can be presented automatically at an activation time and this automatic presentation of such a file raises the degree of freedom given to the user as freedom to use the optical disk drive 1.

By setting an owner ID and an application ID, a selected moving picture file can be presented. Thus, it is also possible to raise the degree of freedom given to the user as freedom to use the optical disk drive 1. As described earlier, the owner ID is an ID assigned to an owner involved in the operation to catalog the information pointing to the moving picture (video) file. On the other hand, the application ID is an ID assigned to an application for reproducing the video file.

That is to say, since a video file associated with an entry corresponding to the root directory can be reproduced and presented to the user at an activation time, it is possible to raise the degree of freedom given to the user as freedom to use the optical disk drive 1.

In addition, an owner ID and an application ID can be used to cancel reproduction of an unnecessary video file so as to prevent the video file from being displayed. It is thus possible to raise the degree of freedom given to the user as freedom to use the optical disk drive 1.

On top of that, in accordance with the configuration described above, by cataloging a shadow file property entry, a taste and/or favorite of the user can be reflected without having any effects on the structure of the original index file. It is thus possible to raise the degree of freedom given to the user as freedom to use the optical disk drive 1.

That is to say, as a substitute for extracted information recorded in an original property entry, a replacement extracted information is recorded in a shadow file property entry separated from the original property entry as extracted information to be actually presented to the user. Thus, a taste and/or favorite of the user can be reflected in typically a user interface based on the presented extracted information. As a result, it is possible to raise the degree of freedom given to the user as freedom to use the optical disk drive 1.

In addition, in accordance with the configuration described above, a property entry can be set to point to related files. Thus, a load borne in a process of these related files can be reduced and the user interface can be improved. In turn, the reduced load and the improved user interface make it possible to raise the degree of freedom given to the user as freedom to use the optical disk drive 1.

That is to say, in accordance with an operation to update a file serving as an object of management, extracted information recorded in an entry associated with the file is updated in order to set information included in the entry to point to entries associated with other files. By the same token, in accordance with an operation to delete a file serving as an object of management, extracted information recorded in an entry associated with the file is updated in order to set information included in the entry to point to entries associated with other files. Thus, by applying this feature to processing such as a post-recording process, the processing can be made simple.

On top of that, in accordance with the configuration described above, extracted information are cataloged in pieces of private index data for each application to generate a private index file with each piece of private index data corresponding to an entry of the index file. Thus, the operability of the index file is enhanced.

In addition, each entry of the index file includes pieces of information each associated with a recorded private index file and used for indicating whether private index data included in the private index file as private index data corresponding to the entry is valid or invalid. By including the information used for indicating whether private index data included in the private index file is valid or invalid, contradictory records can be prevented from being cataloged.

That is to say, by updating the information used for indicating whether private index data included in the private index file is valid or invalid in a process to change recording status of a file, contradictory records can be prevented from being cataloged. As a result, it is possible to prevent the operability from deteriorating due to such contradiction.

### (4): Other Embodiments

In the embodiment described above, the list of private index files is described as extension data of an entry associated with the root directory of the recording medium. It is to be noted, however, that the scope of the present invention is not limited to this preferred embodiment. That is to say, it is possible to adopt a broad variety of techniques for cataloging the list of private index files. For example, the list of private index files can also be provided as a portion of the file header PH placed at the beginning of a property entry file as shown in (A) of Fig. 2. As another alternative, the list of private index files can also be provided as a special entry.

In addition, in the embodiment described above, extension data such as the disk title property and the list of private index files is cataloged as an entry associated with the root directory of the recording medium. It is to be noted, however, that the scope of the present invention is not limited to this preferred embodiment. That is to say, it is not necessary to catalog the disk title property and the list of private index files as properties that are always associated with a root directory actually existing in the file system. For example, it is also possible to catalog the disk title property and the list of private index files as properties that are associated with a root folder serving as the root on the top of a virtual hierarchical tree structure consisting of entries each pointed to by a parent entry number as described earlier.

On top of that, in the embodiment described above, an index file is generated by holding data groups each composed of extracted information and management data groups for managing these data groups together as a QT file structure conforming to the external reference format. It is to be noted, however, that the scope of the present invention is not limited to this preferred embodiment. That is to say, a variety of formats can be applied if necessary.

Furthermore, in the embodiment described above, a moving picture file pointed to by a property entry associated with a root directory is automatically reproduced. It is to be noted, however, that the scope of the present invention is not limited to this preferred embodiment. For example, a folder can also be handled in the same way as such a moving picture file.

Moreover, the embodiment described above is described for a case in which the present invention is applied to an optical disk drive in order to record information such as a result of image taking and an output of a personal computer onto a recording medium. It is to be noted, however, that the scope of the present invention is not limited to this preferred embodiment. That is to say, the present invention can also be applied to a wide range of cases such as a case of managing a large number of files recorded on a variety of recording mediums including a magneto-optical disk and a hard disk and a case of managing a large number of files held by a predetermined server.

In addition, the embodiment described above is applied to a case of managing management-object files, which are recorded on a recording medium as a QT movie file. It is to be noted, however, that the scope of the present invention is not limited to this preferred embodiment. That is to say, the present invention can also be applied to a wide range of cases such as a case of managing video and audio data files conforming to a variety of formats.

On top of that, the embodiment described above is applied to a case in which an index file is recorded on a recording medium along with files each serving as an object of management. It is to be noted, however, that the scope of the present invention is not limited to this preferred embodiment. That is to say, the present invention can also be applied to a wide range of cases such as a case of recording an index file on a recording medium different from a recording medium used for recording files each serving as an object of management and a case of holding an index file in a server different from a server for storing files each serving as an object of management.

### INDUSTRIAL APPLICABILITY

The present invention relates to recording apparatus, reproduction apparatus, file management methods, programs used for implementing the file management methods and recording mediums used for recording the programs used for implementing the file management methods. The present invention can be applied to, among others, an optical disk drive.

## Claims

1. A recording apparatus for recording a desired file onto a recording medium wherein:
an index file for files which are recorded onto said recording medium, is generated based on a series of entries, which are composed of block of extracted information about said files with which said block is associated; and
each of said entries of said index file includes the size of said file associated with said entry.

2. A reproduction apparatus for reproducing a file from a recording medium on the basis of an index file and presenting said file to the user wherein:
said index file is generated as an index file comprising a series of entries, which are composed of block of extracted information about said files with which said block is associated; and
a file size set in any specific one of said entries as the size of a file associated with said specific entry is used as a basis of determination as to whether or not said file associated with said specific entry is a reproducible file.

3. The reproduction apparatus according to claim 2 wherein:
a user interface based on a result of said determination as to whether or not a file associated with a specific entry is a reproducible file is presented; and
the user is allowed to select a reproducible file from said user interface.

4. A file management method for recording a desired file onto a recording medium wherein:
an index file for files which are recorded onto said recording medium, is generated based on a series of entries, which are composed of block of extracted information about said files with which said block is associated; and
each of said entries of said index file includes the size of said file associated with said entry.

5. A file management method for reproducing a file from a recording medium on the basis of an index file and presenting said file to the user wherein:
said index file is generated as an index file comprising a series of entries, which are composed of block of extracted information about said files with which said block is associated; and
a file size set in any specific one of said entries as the size of a file associated with said specific entry is used as a basis of determination as to whether or not said file associated with said specific entry is a reproducible file.

6. A program to be executed by a computer to carry out a predetermined processing procedure as a program implementing a file management method for recording a desired file onto a recording medium wherein:
an index file for files which are recorded onto said recording medium, is generated based on a series of entries, which are composed of block of extracted information about said files with which said block is associated; and
each of said entries of said index file includes the size of said file associated with said entry.

7. A program to be executed by a computer to carry out a predetermined processing procedure as a program implementing a file management method for reproducing a file from a recording medium on the basis of an index file and presenting said file to the user wherein:
said index file is generated as an index file comprising a series of entries, which are composed of block of extracted information about said files with which said block is associated; and
said processing procedure includes the step of determining whether or not a file associated with any specific one of said entries is a reproducible file on the basis of a file size set in said specific entry as the size of said file associated with said specific entry.

8. A recording medium used for recording a program to be executed by a computer to carry out a predetermined processing procedure as a program implementing a file management method for recording a desired file onto a recording medium wherein:
an index file for files which are recorded onto said recording medium, is generated based on a series of entries, which are composed of block of extracted information about said files with which said block is associated; and
each of said entries of said index file includes the size of said file associated with said entry.

9. A recording medium used for recording a program to be executed by a computer to carry out a predetermined processing procedure as a program implementing a file management method for reproducing a file from a recording medium on the basis of an index file and presenting said file to the user wherein:
said index file is generated as an index file comprising a series of entries, which are composed of block of extracted information about said files with which said block is associated; and
said processing procedure includes the step of determining whether or not a file associated with any specific one of said entries is a reproducible file on the basis of a file size set in said specific entry as the size of said file associated with said specific entry.

10. A recording apparatus for recording a desired file onto a recording medium wherein:
an index file for files which are recorded onto said recording medium, is generated based on a series of entries, which are composed of block of extracted information about said files with which said block is associated; and
for a plurality of specific ones selected among said files to be processed at the same time at a reproduction time, said pieces of extracted information of said specific files are recorded collectively in any specific one of said entries.

11. The recording apparatus according to claim 10, wherein said specific entry is an entry associated with a representative file representing said specific files.

12. A reproduction apparatus for reproducing a file from a recording medium on the basis of an index file and presenting said file to the user wherein:
said index file is generated as an index file comprising a series of entries, which are composed of block of extracted information about said files with which said block is associated;
for a plurality of specific ones selected among said files to be processed at the same time at a reproduction time, said pieces of extracted information of said specific files are recorded collectively in any specific one of said entries; and
said specific files are reproduced by using a user interface associated with said specific entry.

13. A file management method for recording a desired file onto a recording medium wherein:
an index file for files which are recorded onto said recording medium, is generated based on a series of entries, which are composed of block of extracted information about said files with which said block is associated; and
for a plurality of specific ones selected among said files to be processed at the same time at a reproduction time, said pieces of extracted information of said specific files are recorded collectively in any specific one of said entries.

14. A file management method for reproducing a file from a recording medium on the basis of an index file and presenting said file to the user wherein:
said index file is generated as an index file comprising a series of entries, which are composed of block of extracted information about said files with which said block is associated;
for a plurality of specific ones selected among said files to be processed at the same time at a reproduction time, said pieces of extracted information of said specific files are recorded collectively in any specific one of said entries; and
said specific files are reproduced by using a user interface associated with said specific entry.

15. A program to be executed by a computer to carry out a predetermined processing procedure as a program implementing a file management method for recording a desired file onto a recording medium wherein:
an index file for files which are recorded onto said recording medium, is generated based on a series of entries, which are composed of block of extracted information about said files with which said block is associated; and
for a plurality of specific ones selected among said files to be processed at the same time at a reproduction time, said pieces of extracted information of said specific files are recorded collectively in any specific one of said entries.

16. A program to be executed by a computer to carry out a predetermined processing procedure as a program implementing a file management method for reproducing a file from a recording medium on the basis of an index file and presenting said file to the user wherein:
said index file is generated as an index file comprising a series of entries, which are composed of block of extracted information about said files with which said block is associated;
for a plurality of specific ones selected among said files to be processed at the same time at a reproduction time, said pieces of extracted information of said specific files are recorded collectively in any specific one of said entries; and
said processing procedure includes the step of reproducing said specific files by using a user interface associated with said specific entry.

17. A recording medium used for recording a program to be executed by a computer to carry out a predetermined processing procedure as a program implementing a file management method for recording a desired file onto a recording medium wherein:
an index file for files which are recorded onto said recording medium, is generated based on a series of entries, which are composed of block of extracted information about said files with which said block is associated; and
for a plurality of specific ones selected among said files to be processed at the same time at a reproduction time, said pieces of extracted information of said specific files are recorded collectively in any specific one of said entries.

18. A recording medium used for recording a program to be executed by a computer to carry out a predetermined processing procedure as a program implementing a file management method for reproducing a file from a recording medium on the basis of an index file and presenting said file to the user wherein:
said index file is generated as an index file comprising a series of entries, which are composed of block of extracted information about said files with which said block is associated;
for a plurality of specific ones selected among said files to be processed at the same time at a reproduction time, said pieces of extracted information of said specific files are recorded collectively in any specific one of said entries; and
said processing procedure includes the step of reproducing said specific files by using a user interface associated with said specific entry.

19. A recording apparatus for recording a desired file onto a recording medium wherein:
an index file for files which are recorded onto said recording medium, is generated based on a series of entries, which are composed of block of extracted information about said files with which said block is associated;
an entry associated with a root directory of said recording medium is provided in said index file; and
information pointing to a video file recorded on said recording medium is set in said entry associated with said root directory.

20. The recording apparatus according to claim 19, wherein said entry associated with said root directory also includes set information such as:
an owner identifier used for identifying an owner involved in an operation to catalog said information pointing to said video file; and
an application identifier used for identifying an application accompanying an operation to reproduce said video file.

21. A reproduction apparatus for reproducing a file from a recording medium on the basis of an index file and presenting said file to the user wherein:
said index file is generated as an index file comprising a series of entries, which are composed of block of extracted information about said files with which said block is associated;
information pointing to a video file recorded on said recording medium is set in said entry associated with said root directory; and
when said recording medium is mounted on said reproduction apparatus or when a power supply is turned on, said video file is reproduced from said recording medium on the basis of said information pointing to said video file and shows said video file to the user.

22. The reproduction apparatus according to claim 21, wherein:
said entry associated with said root directory also includes set information such as:
an owner identifier used for identifying an owner involved in an operation to catalog said information pointing to said video file; and
an application identifier used for identifying an application accompanying an operation to reproduce said video file; and
an operation to reproduce said video file is cancelled in accordance with said owner identifier and said application identifier.

23. A file management method for recording a desired file onto a recording medium wherein:
an index file for files which are recorded onto said recording medium, is generated based on a series of entries, which are composed of block of extracted information about said files with which said block is associated;
an entry associated with a root directory of said recording medium is provided in said index file; and
information pointing to a video file recorded on said recording medium is set in said entry associated with said root directory.

24. A file management method for reproducing a file from a recording medium on the basis of an index file and presenting said file to the user wherein:
said index file is generated as an index file comprising a series of entries, which are composed of block of extracted information about said files with which said block is associated;
information pointing to a video file recorded on said recording medium is set in said entry associated with said root directory; and
when said recording medium is mounted on said reproduction apparatus or when a power supply is turned on, said video file is reproduced from said recording medium on the basis of said information pointing to said video file and shown to the user.

25. A program to be executed by a computer to carry out a predetermined processing procedure as a program implementing a file management method for recording a desired file onto a recording medium wherein:
an index file for files which are recorded onto said recording medium, is generated based on a series of entries, which are composed of block of extracted information about said files with which said block is associated;
an entry associated with a root directory of said recording medium is provided in said index file; and
information pointing to a video file recorded on said recording medium is set in said entry associated with said root directory.

26. A program to be executed by a computer to carry out a predetermined processing procedure as a program implementing a file management method for reproducing a file from a recording medium on the basis of an index file and presenting said file to the user wherein:
said index file is generated as an index file comprising a series of entries, which are composed of block of extracted information about said files with which said block is associated;
information pointing to a video file recorded on said recording medium is set in said entry associated with said root directory; and
said processing procedure includes the step of reproducing said video file from said recording medium on the basis of said information pointing to said video file and showing said video file to the user as triggered by an operation to mount said recording medium or an operation to turn on a power supply.

27. A recording medium used for recording a program to be executed by a computer to carry out a predetermined processing procedure as a program implementing a file management method for recording a desired file onto a recording medium wherein:
an index file for files which are recorded onto said recording medium, is generated based on a series of entries, which are composed of block of extracted information about said files with which said block is associated;
an entry associated with a root directory of said recording medium is provided in said index file; and
information pointing to a video file recorded on said recording medium is set in said entry associated with said root directory.

28. A recording medium used for recording a program to be executed by a computer to carry out a predetermined processing procedure as a program implementing a file management method for reproducing a file from a recording medium on the basis of an index file and presenting said file to the user wherein:
said index file is generated as an index file comprising a series of entries, which are composed of block of extracted information about said files with which said block is associated;
information pointing to a video file recorded on said recording medium is set in said entry associated with said root directory; and
said processing procedure includes the step of reproducing said video file from said recording medium on the basis of said information pointing to said video file and showing said video file to the user as triggered by an operation to mount said recording medium or an operation to turn on a power supply.

29. A recording apparatus for recording a desired file onto a recording medium wherein:
an index file for files which are recorded onto said recording medium, is generated based on a series of entries, which are composed of block of extracted information about said files with which said block is associated; and
an entry is cataloged in said index file as a separate entry including extracted information of said particular file and including information set to point to an original entry associated with said particular file.

30. A reproduction apparatus for reproducing a file from a recording medium on the basis of an index file and presenting said file to the user wherein:
said index file is generated as an index file comprising a series of entries, which are composed of block of extracted information about said files with which said block is associated;
an entry is cataloged and held in said index file as a separate entry including extracted information of said particular file and including information set to point to an original entry associated with said particular file; and
said extracted information included in said separate entry is presented to the user as a substitute for said extracted information recorded in said original entry associated with said particular file.

31. A file management method for recording a desired file onto a recording medium wherein:
an index file for files which are recorded onto said recording medium, is generated based on a series of entries, which are composed of block of extracted information about said files with which said block is associated; and
an entry is cataloged in said index file as a separate entry including extracted information of said particular file and including information set to point to an original entry associated with said particular file.

32. A file management method for reproducing a file from a recording medium on the basis of an index file and presenting said file to the user wherein:
said index file is generated as an index file comprising a series of entries, which are composed of block of extracted information about said files with which said block is associated;
an entry is cataloged and held in said index file as a separate entry including extracted information of said particular file and including information set to point to an original entry associated with said particular file; and
said extracted information included in said separate entry is presented to the user as a substitute for said extracted information recorded in said original entry associated with said particular file.

33. A program to be executed by a computer to carry out a predetermined processing procedure as a program implementing a file management method for recording a desired file onto a recording medium wherein:
an index file for files which are recorded onto said recording medium, is generated based on a series of entries, which are composed of block of extracted information about said files with which said block is associated; and
an entry is cataloged in said index file as a separate entry including extracted information of said particular file and including information set to point to an original entry associated with said particular file.

34. A program to be executed by a computer to carry out a predetermined processing procedure as a program implementing a file management method for reproducing a file from a recording medium on the basis of an index file and presenting said file to the user wherein:
said index file is generated as an index file comprising a series of entries, which are composed of block of extracted information about said files with which said block is associated;
an entry is cataloged and held in said index file as a separate entry including extracted information of said particular file and including information set to point to an original entry associated with said particular file; and
said processing procedure presents said extracted information included in said separate entry to the user as a substitute for said extracted information recorded in said original entry associated with said particular file.

35. A recording medium used for recording a program to be executed by a computer to carry out a predetermined processing procedure as a program implementing a file management method for recording a desired file onto a recording medium wherein:
an index file for files which are recorded onto said recording medium, is generated based on a series of entries, which are composed of block of extracted information about said files with which said block is associated; and
an entry is cataloged in said index file as a separate entry including extracted information of said particular file and including information set to point to an original entry associated with said particular file.

36. A recording medium used for recording a program to be executed by a computer to carry out a predetermined processing procedure as a program implementing a file management method for reproducing a file from a recording medium on the basis of an index file and presenting said file to the user wherein:
said index file is generated as an index file comprising a series of entries, which are composed of block of extracted information about said files with which said block is associated;
an entry is cataloged and held in said index file as a separate entry including extracted information of said particular file and including information set to point to an original entry associated with said particular file; and
said processing procedure presents said extracted information included in said separate entry to the user as a substitute for said extracted information recorded in said original entry associated with said particular file.

37. A recording apparatus for recording a desired file onto a recording medium wherein:
an index file for files which are recorded onto said recording medium, is generated based on a series of entries, which are composed of block of extracted information about said files with which said block is associated; and
if there is another file that needs to be updated to accompany an operation to newly record a file to serve as an object of management, update an already recorded file serving as an object of management or delete an already recorded file serving as an object of management, information pointing to an entry associated with said other file is cataloged in an entry associated with said newly recorded file to serve as an object of management, said updated file serving as an object of management or said deleted file serving as an object of management.

38. The recording apparatus according to claim 37, wherein when said file serving as an object of management is updated, in order to keep up with said updated file serving as an object of management:
said extracted information cataloged in a specific entry associated with said updated file serving as an object of management is also updated; and
extracted information cataloged in said entry associated with said other file is also updated by using information cataloged in said specific entry as said information pointing to said entry associated with said other file.

39. The recording apparatus according to claim 37, wherein when said file serving as an object of management is deleted, in order to reflect said deleted file serving as an object of management:
a specific entry associated with said deleted file serving as an object of management is de-cataloged; and
extracted information cataloged in said entry associated with said other file is also updated by using information cataloged in said specific entry as said information pointing to said entry associated with said other file.

40. A file management method for recording a desired file onto a recording medium wherein:
an index file for files which are recorded onto said recording medium, is generated based on a series of entries, which are composed of block of extracted information about said files with which said block is associated; and
if there is another file that needs to be updated to accompany an operation to newly record a file to serve as an object of management, update an already recorded file serving as an object of management or delete an already recorded file serving as an object of management, information pointing to an entry associated with said other file is cataloged in an entry associated with said newly recorded file to serve as an object of management, said updated file serving as an object of management or said deleted file serving as an object of management.

41. A program to be executed by a computer to carry out a predetermined processing procedure as a program implementing a file management method for recording a desired file onto a recording medium wherein:
an index file for files which are recorded onto said recording medium, is generated based on a series of entries, which are composed of block of extracted information about said files with which said block is associated; and
if there is another file that needs to be updated to accompany an operation to newly record a file to serve as an object of management, update an already recorded file serving as an object of management or delete an already recorded file serving as an object of management, information pointing to an entry associated with said other file is cataloged in an entry associated with said newly recorded file to serve as an object of management, said updated file serving as an object of management or said deleted file serving as an object of management.

42. A recording medium used for recording a program to be executed by a computer to carry out a predetermined processing procedure as a program implementing a file management method for recording a desired file onto a recording medium wherein:
an index file for files which are recorded onto said recording medium, is generated based on a series of entries, which are composed of block of extracted information about said files with which said block is associated; and
if there is another file that needs to be updated to accompany an operation to newly record a file to serve as an object of management, update an already recorded file serving as an object of management or delete an already recorded file serving as an object of management, information pointing to an entry associated with said other file is cataloged in an entry associated with said newly recorded file to serve as an object of management, said updated file serving as an object of management or said deleted file serving as an object of management.

43. A recording apparatus for recording a desired file onto a recording medium wherein:
an index file for files which are recorded onto said recording medium, is generated based on a series of entries, which are composed of block of extracted information about said files with which said block is associated;
a private index file for said files recorded onto said recording medium is generated based on a series of private index data each representing extracted information of one of said files, and recorded onto said recording medium as an index file, which is unique to an application; and
in order to distinguish said private index file from another private index file already recorded on said recording medium, in every entry included in said index file as an entry associated with a particular one of said pieces of private index data included in said private index file, information is set to show a relation between said entry and said particular piece of private index data.

44. The recording apparatus according to claim 43, wherein for each of said private index files, every entry included in said index file as an entry associated with a particular one of said pieces of private index data included in said corresponding private index file includes validity information indicating whether said particular piece of private index data is valid or invalid.

45. The recording apparatus according to claim 44, wherein when recording status of a file associated with any specific one of said entries is updated, said validity information included in said specific entry as information indicating whether a piece of private index data is valid or invalid is also updated.

46. A file management method for recording a desired file onto a recording medium wherein:
an index file for files which are recorded onto said recording medium, is generated based on a series of entries, which are composed of block of extracted information about said files with which said block is associated;
a private index file for said files recorded onto said recording medium is generated based on a series of private index data each representing extracted information of one of said files, and recorded onto said recording medium as an index file, which is unique to an application; and
in order to distinguish said private index file from another private index file already recorded on said recording medium, in every entry included in said index file as an entry associated with a particular one of said pieces of private index data included in said private index file, information is set to show a relation between said entry and said particular piece of private index data.

47. A program to be executed by a computer to carry out a predetermined processing procedure as a program implementing a file management method for recording a desired file onto a recording medium wherein:
an index file for files which are recorded onto said recording medium, is generated based on a series of entries, which are composed of block of extracted information about said files with which said block is associated;
a private index file for said files recorded onto said recording medium is generated based on a series of private index data each representing extracted information of one of said files, and recorded onto said recording medium as an index file, which is unique to an application; and
in order to distinguish said private index file from another private index file already recorded on said recording medium, in every entry included in said index file as an entry associated with a particular one of said pieces of private index data included in said private index file, information is set to show a relation between said entry and said particular piece of private index data.

48. A recording medium used for recording a program to be executed by a computer to carry out a predetermined processing procedure as a program implementing a file management method for recording a desired file onto a recording medium wherein:
an index file for files which are recorded onto said recording medium, is generated based on a series of entries, which are composed of block of extracted information about said files with which said block is associated;
a private index file for said files recorded onto said recording medium is generated based on a series of private index data each representing extracted information of one of said files, and recorded onto said recording medium as an index file, which is unique to an application; and
in order to distinguish said private index file from another private index file already recorded on said recording medium, in every entry included in said index file as an entry associated with a particular one of said pieces of private index data included in said private index file, information is set to show a relation between said entry and said particular piece of private index data.

49. A recording apparatus for recording a desired file onto a recording medium wherein:
an index file for files recorded on said recording medium is recorded onto said recording medium as an index file comprising a series of entries, which are composed of block of extracted information about said files with which said block is associated;
a private index file for said files recorded onto said recording medium is generated based on a series of private index data each representing extracted information of one of said files, and recorded onto said recording medium as an index file, which is unique to an application;
for each of said private index files, every entry included in said index file as an entry associated with a particular one of said pieces of private index data included in said corresponding private index file includes validity information indicating whether said particular piece of private index data is valid or invalid; and
when recording status of a file associated with any specific one of said entries is updated, said validity information included in said specific entry as information indicating whether a piece of private index data is valid or invalid is also updated.

50. A file management method for recording a desired file onto a recording medium wherein:
an index file for files recorded on said recording medium is recorded onto said recording medium as an index file comprising a series of entries, which are composed of block of extracted information about said files with which said block is associated;
a private index file for said files recorded onto said recording medium is generated based on a series of private index data each representing extracted information of one of said files, and recorded onto said recording medium as an index file, which is unique to an application;
for each of said private index files, every entry included in said index file as an entry associated with a particular one of said pieces of private index data included in said corresponding private index file includes validity information indicating whether said particular piece of private index data is valid or invalid; and
when recording status of a file associated with any specific one of said entries is updated, said validity information included in said specific entry as information indicating whether a piece of private index data is valid or invalid is also updated.

51. A program to be executed by a computer to carry out a predetermined processing procedure as a program implementing a file management method for recording a desired file onto a recording medium wherein:
an index file for files recorded on said recording medium is recorded onto said recording medium as an index file comprising a series of entries, which are composed of block of extracted information about said files with which said block is associated;
a private index file for said files recorded onto said recording medium is generated based on a series of private index data each representing extracted information of one of said files, and recorded onto said recording medium as an index file, which is unique to an application;
for each of said private index files, every entry included in said index file as an entry associated with a particular one of said pieces of private index data included in said corresponding private index file includes validity information indicating whether said particular piece of private index data is valid or invalid; and
said processing procedure includes the step of updating said validity information included in any specific one of said entries as information indicating whether a piece of private index data is valid or invalid to accompany an operation to update recording status of a file associated with said specific entry.

52. A recording medium used for recording a program to be executed by a computer to carry out a predetermined processing procedure as a program implementing a file management method for recording a desired file onto a recording medium wherein:
an index file for files recorded on said recording medium is recorded onto said recording medium as an index file comprising a series of entries, which are composed of block of extracted information about said files with which said block is associated;
a private index file for said files recorded onto said recording medium is generated based on a series of private index data each representing extracted information of one of said files, and recorded onto said recording medium as an index file, which is unique to an application;
for each of said private index files, every entry included in said index file as an entry associated with a particular one of said pieces of private index data included in said corresponding private index file includes validity information indicating whether said particular piece of private index data is valid or invalid; and
said processing procedure includes the step of updating said validity information included in any specific one of said entries as information indicating whether a piece of private index data is valid or invalid to accompany an operation to update recording status of a file associated with said specific entry.
